# EUROPEAN PATENT SPECIFICATION

(11) **EP 2 973 511 B1**
(45) Date of publication and mention of the grant of the patent: **17.10.2018**
(21) Application number: 14720216.2
(22) Date of filing: 07.03.2014
(51) Int. Cl.: B23K 9/095, B23K 9/10, B23K 9/32, G09B 19/24

(54) **VIRTUAL REALITY GTAW AND PIPE WELDING SIMULATOR AND SETUP**
AUF VIRTUELLER REALITÄT BASIERENDER GTAW- UND ROHRVERSCHWEISSUNGSSIMULATOR UND EINRICHTUNG
SOUDAGE À L'ÉLECTRODE DE TUNGSTÈNE DE RÉALITÉ VIRTUELLE ET SIMULATEUR DE SOUDAGE DE TUYAU ET INSTALLATION

(30) Priority: 11.03.2013 US 201313792294
(43) Date of publication of application: 20.01.2016
(73) Proprietor: Lincoln Global, Inc., Santa Fe Springs, CA 90670 (US)
(72) Inventor: WALLACE, Matthew, Wayne, Farmington, CT 06032 (US); ZBORAY, David, Anthony, Trumbull, CT 06611 (US); ADITJANDRA, Antonius, Chardon, OH 44024 (US); WEBB, Adam, Lee, Perry, OH 44081 (US); POSTLETHWAITE, Deanna, Sparks, Nevada 89436 (US); LENKER, Zachary, Steven, Vernon, CT 06066 (US)
(74) Representative: Grosse Schumacher Knauer von Hirschhausen
(86) International application number: PCT/IB2014/000259
(87) International publication number: WO 2014/140710

(56) References cited:
- US-A- 3 866 011
- US-A- 4 359 622
- US-A1- 2001 052 893
- US-A1- 2011 183 304

## Description

### CROSS-REFERENCE TO RELATED APPLICATIONS

### TECHNICAL FIELD

The present invention pertains to systems for emulating a virtual welding environment, and more particularly to virtual welding environments that emulate Gas Tungsten Arc Welding (GTAW or TIG), the welding of pipe and open root joints in real time, and the setup thereof. Still more particularly, the invention relates to a simulator and a system for facilitating virtual welding.

### BACKGROUND OF THE INVENTION

For decades companies have been teaching welding skills. Traditionally, welding has been taught in a real world setting, that is to say that welding has been taught by actually striking an arc with an electrode on a piece of metal. Instructors, skilled in the art, oversee the training process making corrections in some cases as the trainee performs a weld. By instruction and repetition, a new trainee learns how to weld using one or more processes. However, costs are incurred with every weld performed, which varies depending on the welding process being taught.

In more recent times, cost saving systems for training welders have been employed. Some systems incorporate a motion analyzer. The analyzer includes a physical model of a weldment, a mock electrode and sensing means that track movement of the mock electrode. A report is generated that indicates to what extent the electrode tip traveled outside an acceptable range of motion. More advanced systems incorporate the use of virtual reality, which simulates manipulation of a mock electrode in a virtual setting. Similarly, these systems track position and orientation. Such systems teach only muscle memory, but cannot teach the more advanced welding skills required of a skilled welder.

### BRIEF SUMMARY

One embodiment provides a simulator for facilitating virtual welding activity as defined in independent claim 1.

### BRIEF DESCRIPTION OF THE DRAWINGS

Figure 1 is a perspective view of an end user operator engaging in virtual welding activity with a simulator;
Figure 2 is a front view of a simulator;
Figure 3a is a chart showing pipe welding positions;
Figure 3b is a chart showing plate welding positions;
Figure 4 is an exemplary schematic block diagram of a representation of a first embodiment of a simulator;
Figure 5 is a side perspective view of a mock welding tool;
Figure 6 is a close up view of welding user interface;
Figure 6a is a close up view of an observer display device;
Figure 7a is perspective view of a personalized display device;
Figure 7b is perspective view of a personalized display device worn by an end user;
Figure 7c is perspective view of a personalized display device mounted in a welding helmet;
Figure 8 is a perspective view of a spatial tracker;
Figure 9 is a perspective view of a stand for holding welding coupons;
Figure 9a is a perspective view of a pipe welding coupon;
Figure 9b is a perspective view of a pipe welding coupon mounted into the stand.
Figure 10 illustrates an example embodiment of a subsystem block diagram of a logic processor-based subsystem;
Figure 11 illustrates an example embodiment of a block diagram of a graphics processing unit (GPU) of the logic processor-based subsystem;
Figure 12 illustrates an example embodiment of a functional block diagram of the simulator;
Figure 13 is a flow chart of an embodiment of a method of training using the virtual reality training system;
Figures 14a-14b illustrate the concept of a welding pixel (wexel) displacement map;
Figure 15 illustrates an example embodiment of a coupon space and a weld space of a flat welding coupon simulated in the simulator;
Figure 16 illustrates an example embodiment of a coupon space and a weld space of a corner welding coupon simulated in the simulator;
Figure 17 illustrates an example embodiment of a coupon space and a weld space of a pipe welding coupon simulated in the simulator;
Figure 18 illustrates an example embodiment of the pipe welding coupon;
Figures 19a-19c illustrate an example embodiment of the concept of a dual-displacement puddle model of the simulator; and
Figure 20 illustrates an example embodiment of an orbital welding system as used in an orbital welding environment;
Figure 21 illustrates a welding tractor for use with the orbital welding system of Figure 20;
Figure 22 illustrates a power source and controller of the orbital welding system of Figure 20;
Figure 23 illustrates a pendant for use with the orbital welding system of Figure 20;
Figure 24 illustrates a schematic block diagram of an exemplary representation of a second embodiment of a simulator;
Figure 25 illustrates an exemplary embodiment of a foot pedal device used in the simulator of Figure 24;
Figure 26 illustrates an exemplary embodiment of the simulator of Figure 24 showing the foot pedal device of Figure 24;
Figure 27 illustrates an exemplary embodiment of a virtual welding activity in virtual reality space; and
Figure 28 illustrates an exemplary embodiment of a simulated welding activity, representative of the virtual welding activity of Figure 27, using a mock welding tool and a mock filler wire having sensors.

### DETAILED DESCRIPTION OF THE INVENTION

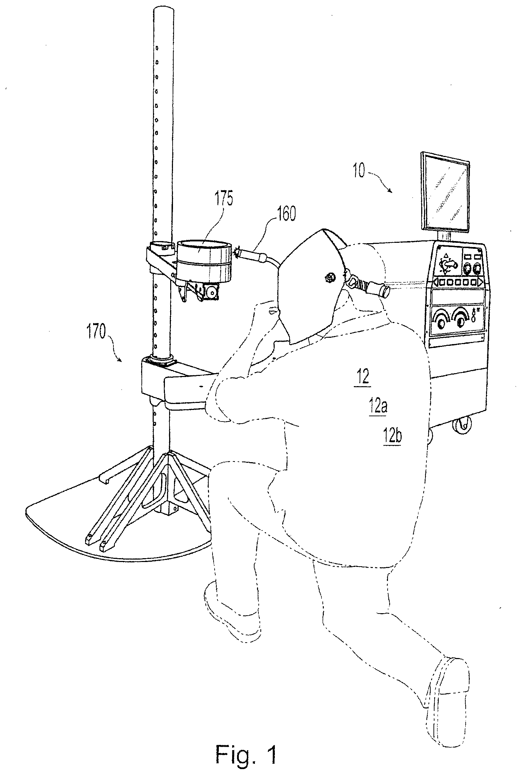

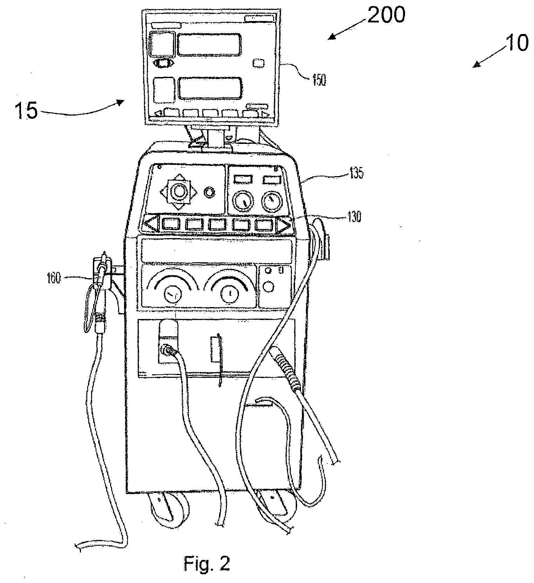

Referring now to the drawings wherein the showings are for purposes of illustrating embodiments of the invention only and not for purposes of limiting the same, Figures 1 and 2 show a system for simulating welding depicted generally at **10**, termed herein as simulator **10** or system **10**. Simulator **10** is capable of generating a virtual environment **15**, which may depict a welding setting similar to that in the real world, and may be known as virtual reality arc welding (VRAW). Within the virtual environment **15**, simulator **10** facilitates interaction with one or more end user(s) **12**. An input device **155** is included that allows an end user **12** to engage in real-world activity, which is tracked by the simulator **10** and translated into virtual activity. The virtual environment **15** thus comprises an interactive virtual welding environment **15**. A displaying device **200** is included that provides visual access into the virtual environment **15** and the end user's **12** activity. In one embodiment, simulator **10** may include a display screen **150** viewable by a plurality of end users **12** or other observers. Additionally, simulator **10** may include a personalized display **140** adapted for use by a single end user **12**, which may be a trainee user **12a** or an instructor user **12b**. It is expressly noted here that the end user's **12** activity in the real world is translated into virtual welding activity and viewed on one or more displays **140**, **150** in real-time. As used herein, the term "real-time" means perceiving and experiencing, in time, a virtual environment in the same way that an end user **12** would perceive and experience, in time, in a real-world setting.

In generating an interactive virtual welding environment **15**, simulator **10** emulates one or more welding processes for a plurality of weld joints in different welding positions, and additionally emulates the effects of different kinds of electrodes for the plurality of joint configurations. In one particular embodiment, simulator **10** generates an interactive virtual welding environment **15** that emulates pipe welding and/or welding of open root joints. The system is capable of simulating a weld puddle having real-time molten metal fluidity and heat dissipation characteristics. The simulator **10** is also capable of modeling how virtual welding activity affects the weld joint, e.g. the underlying base material. Illustratively, simulator **10** may emulate welding a root pass and a hot pass, as well as subsequent filler and cap passes, each with characteristics paralleling real-world scenarios. Each subsequent pass may weld significantly different from that of the previous pass as a result of changes in the base material made during the previous pass and/or as a result of a differently selected electrode. Real-time feedback of the puddle modeling allows the end user **12** to observe the virtual welding process on the display **200** and adjust or maintain his/her technique as the virtual weld is being performed. Examples of the kinds of virtual indicators observed may include: flow of the weld puddle, shimmer of molten puddle, changes in color during puddle solidification, freeze rate of the puddle, color gradients of heat dissipation, sound, bead formation, weave pattern, formation of slag, undercut, porosity, spatter, slag entrapment, overfill, blowthrough, and occlusions to name a few. It is to be realized that the puddle characteristics are dependent upon, that is to say responsive to, the end user's **12** movement of the input device **155**. In this manner, the displayed weld puddle is representative of a real-world weld puddle formed in real-time based on the selected welding process and on the end user's **12** welding technique. Furthermore, "wagon tracks" is the visual trail of weld defects and slag left behind in the toes of the root pass made during pipe welding using the SMAW process. The second pass in pipe welding, called the hot pass, must be hot enough to remelt the wagon tracks so they are eliminated in the final weldment. Also, wagon tracks may be removed by a grinding process. Such wagon tracks and elimination of the wagon tracks are properly simulated in the simulator **10** described herein, in accordance with an embodiment of the present invention.

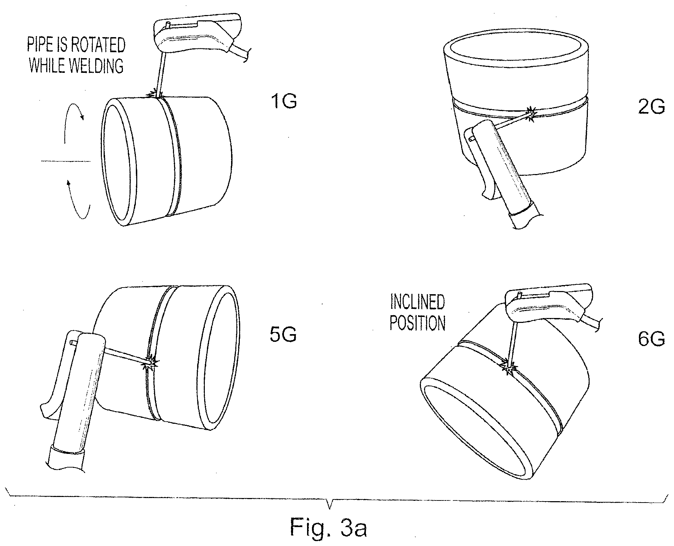

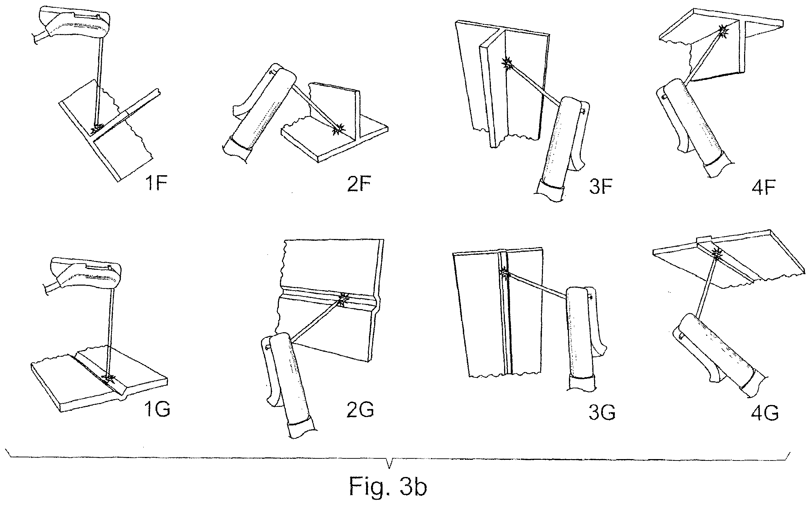

With continued reference to Figures 1 and 2 and now also to Figure 3a and 3b, simulator **10** may emulate welding processes in various welding positions and models how the weld puddle reacts in each position. More specifically, simulator **10** may emulate pipe welding in vertical, horizontal and/or inclined positions referred to in the art respectively as the 5G, 2G and 6G positions. Additionally, simulator **10** may emulate welding in a 1G position which relates to the rotating horizontal position of the pipe, or in a 4G position which relates to welding overhead as may be associated with a groove weld in abutting plates. Other welding positions may relate to the welding of open root joints for various configurations of flat plate. It is to be understood that the simulator **10**, including a modeling and analysis engine to be described in detail in subsequent paragraphs, takes into account the effects of gravity on the weld puddle. Accordingly, the weld puddle reacts differently, for example, for a welding pipe in a 5G position from that of a 6G position. The examples above are not to be construed as limiting, but are included for illustrative purposes. Those skilled in the art will readily understand its application to any weld joint, welding position, or type of weldment including different kinds of base material.

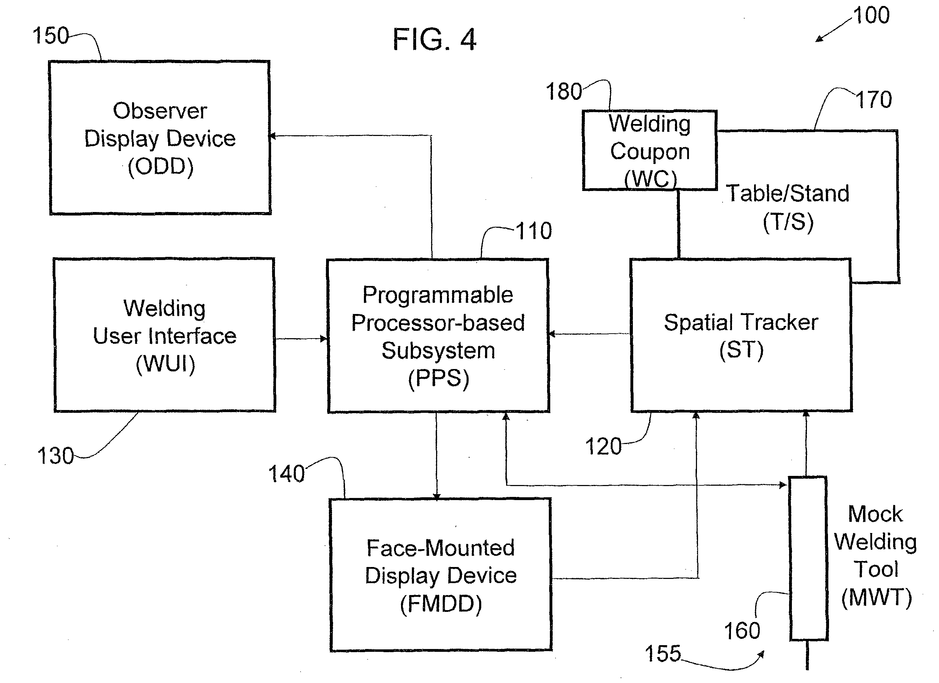

With reference now to Figures 2 and 4, simulator **10** includes a logic processor-based subsystem **110**, which may be programmable and operable to execute coded instructions for generating the interactive virtual welding environment **15**. Simulator **10** further includes sensors and/or sensor systems, which may be comprised of a spatial tracker **120,** operatively connected to the logic processor-based subsystem **110**. Simulator **10** also includes a welding user interface **130** in communication with the logic processor-based subsystem **110** for set up and control of the simulator **10**. As referenced above, displaying device(s) **200** are included, which may comprise a face-mounted display device **140** and an observer display device **150** each connected to the logic processor-based subsystem **110** providing visual access to the interactive virtual welding environment **15**. One or more of the displaying devices **200** may be connected to the spatial tracker **120** for changing the images viewed on the device in response to its position and/or movement thereof, as described below.

### INPUT DEVICE

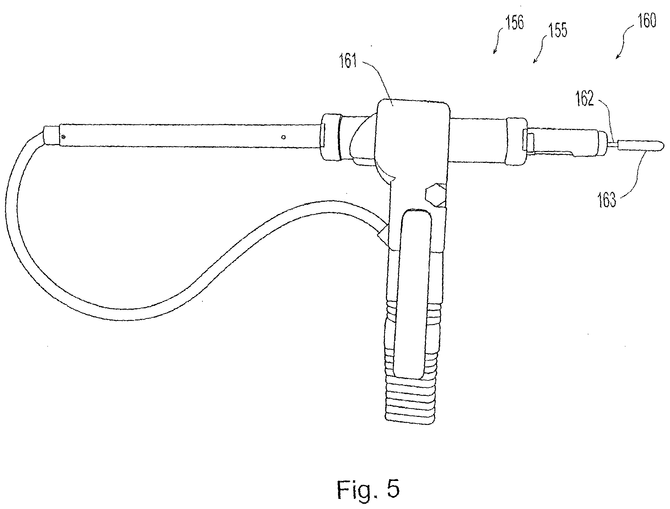

With reference now to Figure 5, as mentioned above, simulator **10** includes an input device **155** that facilitates interaction with the end-user **12**. In one embodiment, input device **155** comprises a mock welding tool **160**. The mock welding tool **160** may be fashioned to resemble a real-world welding tool, like for example, a manual welding electrode holder or a weld gun delivering a continuous feed to electrode, i.e. MIG, FCAW, or GTAW welding tools. Still, other configurations of the mock welding tool **160** may be implemented without departing from the intended scope of coverage of the embodiments of the subject invention. For discussion purposes, the embodiments of the subject invention will be described in the context of using a mock welding tool **160** that resembles a manual welding electrode holder **156**. The mock welding tool **160** may closely resemble a real world welding tool. In one particular embodiment, mock welding tool **160** may have the same shape, weight and feel as a real-world welding tool. In fact, a real welding tool could be used as the mock welding tool **160** to provide the actual feel of the tool in the user's hands, even though, in the simulator **10**, the real welding tool would not be used to actually create a real arc. In this manner, end-user **12**, which may be a trainee user **12a**, becomes accustomed to handling a real-world welding tool thereby enhancing the virtual welding experience. However, the mock welding tool **160** may be constructed in any manner chosen with sound judgment.

Illustratively, mock welding tool **160** simulates a stick welding tool for pipe welding and includes a holder **161** and a simulated stick electrode **162** extending therefrom. The simulated stick electrode **162** may include a tactilely resistive tip **163** to simulate resistive feedback that occurs during welding in a real-world setting. If the end user **12** moves the simulated stick electrode **162** too far back out of the root (described in detail below), the end user **12** will be able to feel or sense the reduced resistance thereby deriving feedback for use in adjusting or maintaining the current welding process. It is contemplated that the stick welding tool may incorporate an actuator, not shown, that withdraws the simulated stick electrode **162** during the virtual welding process. That is to say that as end user **12** engages in virtual welding activity, the distance between holder **161** and the tip of the simulated stick electrode **162** is reduced to simulate consumption of the electrode. The consumption rate, i.e. withdrawal of the stick electrode **162**, may be controlled by the logic processor-based subsystem **110** and more specifically by coded instructions executed by the logic processor-based subsystem **110**. The simulated consumption rate may also depend on the end user's **12** technique. It is noteworthy to mention here that as simulator **10** facilitates virtual welding with different types of electrodes, the consumption rate or reduction of the stick electrode **162** may change with the welding procedure used and/or setup of the simulator **10**.

The actuator of the mock welding tool **160** may be electrically driven. Power for engaging the actuator may come from the simulator **10**, from an external power source or from internal battery power. In one embodiment, the actuator may be an electromotive device, such as an electric motor. Still, any type of actuator or form of motive force may be used including, but not limited to: electromagnetic actuators, pneumatic actuators, mechanical or spring-loaded actuators, in any combination thereof.

As indicated above, the mock welding tool **160** may work in conjunction with the spatial tracker for interacting with the simulator **10**. In particular, the position and/or orientation of mock welding tool **160** may be monitored and tracked by the spatial tracker **120** in real time. Data representing the position and orientation may therefore be communicated to the logic processor-based subsystem **110** and modified or converted for use as required for interacting with the virtual welding environment **15**.

### SPATIAL TRACKER

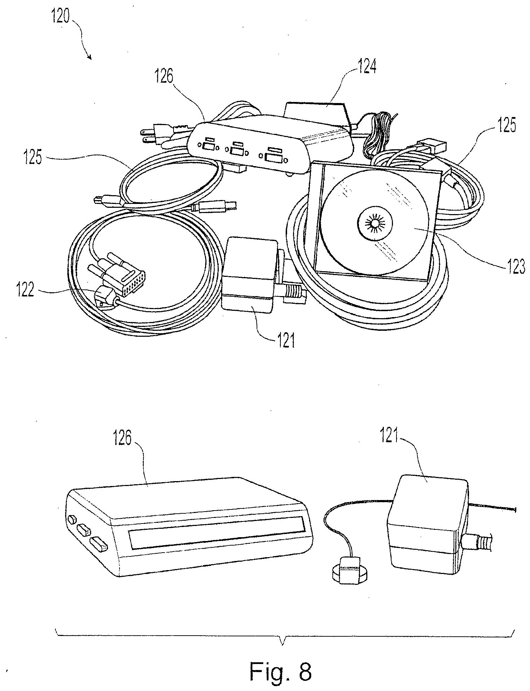

Referencing Figure 8, an example of a spatial tracker **120** is illustrated. Spatial tracker **120** may interface with the logic processor-based subsystem **110**. In one embodiment, the spatial tracker **120** may track the mock welding tool **160** magnetically. That is to say that the spatial tracker generates a magnetic envelope, which is used to determine position and orientation, as well as speed and/or changes in speed. Accordingly, the spatial tracker **120** includes a magnetic source **121** and source cable, one or more sensors **122,** host software on disk **123**, a power source **124**, USB and RS-232 cables **125**, a processor tracking unit **126**, and other associated cables. The magnetic source **121** is capable of being operatively connected to the processor tracking unit **126** via cables, as is sensor **122**. The power source **124** is also capable of being operatively connected to the processor tracking unit **126** via a cable. The processor tracking unit **126** is capable of being operatively connected to the logic processor-based subsystem **110** via a USB or RS-232 cable **125**. The host software on disk **123** may be loaded onto the logic processor-based subsystem **110** and allows functional communication between the spatial tracker **120** and the logic processor-based subsystem **110**.

The magnetic source **121** creates a magnetic field, or envelope, surrounding the source **121** defining a three dimensional space within which end user **12** activity may be tracked for interacting with the simulator **10**. The envelope establishes a spatial frame of reference. Objects used within the envelope, e.g. mock welding tool **160** and coupon stand (described below), may be comprised of non-metallic, i.e. non-ferric and non-conductive, material so as not to distort the magnetic field created by the magnetic source **121**. The sensor **122** may include multiple induction coils aligned in crossing spatial directions, which may be substantially orthogonally aligned. The induction coils measure the strength of the magnetic field in each of the three directions providing information to the processor tracking unit **126**. In one embodiment, the sensor **122** may be attached to the mock welding tool **160** allowing the mock welding tool **160** to be tracked with respect to the spatial frame of reference in both position and orientation. More specifically, the induction coils may be mounted in the tip of the electrode **162**. In this way, simulator **10** is able to determine where within the three dimensional envelope the mock welding tool **160** is positioned. Additional sensors **122** may be provided and operatively attached to the one or more displaying devices **200**. Accordingly, simulator **10** may use sensor data to change the view seen by the end user **12** responsive to the end user's **12** movements. As such, the simulator **10** captures and tracks the end user's **12** activity in the real world for translation into the virtual welding environment **15**.

In accordance with an alternative embodiment of the present invention, the sensor(s) **122** may wirelessly interface to the processor tracking unit **126**, and the processor tracking unit **126** may wirelessly interface to the logic processor-based subsystem **110**. In accordance with other alternative embodiments of the present invention, other types of spatial trackers **120** may be used in the simulator **10** including, for example, an accelerometer/gyroscope-based tracker, an optical tracker, an infrared tracker, an acoustic tracker, a laser tracker, a radio frequency tracker, an inertial tracker, an active or passive optical tracker, and augmented reality based tracking. Still, other types of trackers may be used without departing from the intended scope of coverage of the embodiment of the subject invention.

### DISPLAYING DEVICE

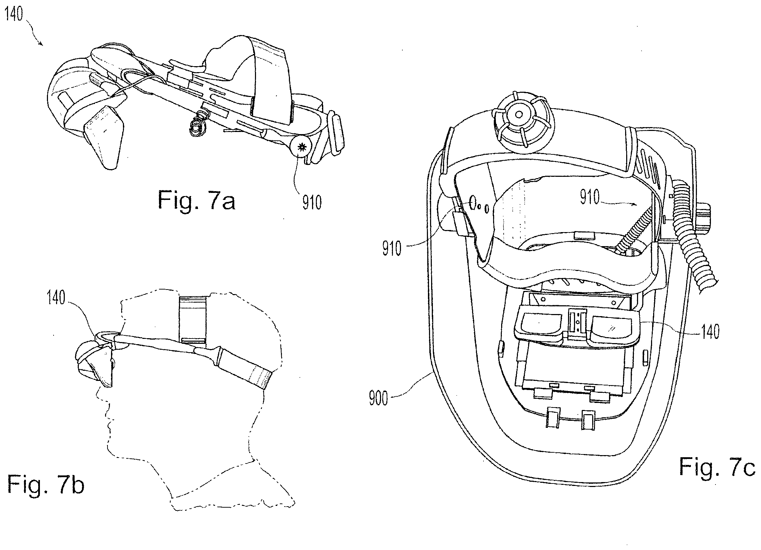

With reference now to Figure 7a, an example of the face-mounted display device **140** will now be described. The face mounted display device **140** may be integrated into a welding helmet **900**, as shown in Figure 7c or alternatively may be separately mounted as shown in Figure 7b. The face mounted display device **140** may include two high-contrast SVGA 3D OLED micro-displays capable of delivering fluid full-motion video in the 2D and frame sequential video modes. Virtual images, e.g. video, from the virtual welding environment **15** is provided and displayed on the face mounted display device **140**. In one embodiment of the subject invention, the logic processor-based subsystem **110** provides stereoscopic video to the face mounted display device **140**, enhancing the depth perception of the user. Stereoscopic images may be produced by a logic processing unit, which may be a graphics processing unit described in detail below. A zoom, e.g., 2X, mode may also be provided, allowing a user to simulate a cheater plate. The face mounted display device **140** operatively connects to the logic processor-based subsystem **110** and the spatial tracker **120** via wired or wireless means. A sensor **122** of the spatial tracker **120** may be attached to the face mounted display device **140** or to the welding helmet **900** thereby allowing the face mounted display device **140** to be tracked with respect to the 3D spatial frame of reference created by the spatial tracker **120**. In this way, movement of the welding helmet **900** responsively alters the image seen by the end user **12** in a three dimensional virtual reality setting.

The face mounted display device **140** may also function to call up and display menu items similar to that of observer display device **150**, as subsequently described. In this manner, an end user is therefore able to use a control on the mock welding tool **160** (e.g., a button or switch) to activate and select options from the menu. This may allow the user to easily reset a weld if he makes a mistake, change certain parameters, or back up to re-do a portion of a weld bead trajectory, for example.

The face mounted display device **140** may further include speakers **910,** allowing the user to hear simulated welding-related and environmental sounds produced by the simulator **10**. Sound content functionality and welding sounds provide particular types of welding sounds that change depending on if certain welding parameters are within tolerance or out of tolerance. Sounds are tailored to the various welding processes and parameters. For example, in a MIG spray arc welding process, a crackling sound is provided when the user does not have the mock welding tool **160** positioned correctly, and a hissing sound is provided when the mock welding tool **160** is positioned correctly. In a short arc welding process, a hissing sound is provided when undercutting is occurring. These sounds mimic real world sounds corresponding to correct and incorrect welding technique.

High fidelity sound content may be taken from real world recordings of actual welding using a variety of electronic and mechanical means. The perceived volume and direction of the sound is modified depending on the position, orientation, and distance of the end user's head, i.e. the face mounted display device **140**, with respect to the simulated arc between the mock welding tool **160** and the welding coupon **175**. Sound may be provided to the user via speakers **910**, which may be earbud speakers or any other type of speakers or sound generating device, mounted in the face mounted display device **140** or alternatively mounted in the console **135** and/or stand **170**. Still, any manner of presenting sound to the end user **12** while engaging in virtual welding activity may be chosen. It is also noted here that other types of sound information may be communicated through the speakers **910**. Examples include verbal instructions from the instructor user **12b,** in either real time or via prerecorded messages. Prerecorded messages may be automatically triggered by particular virtual welding activity. Real time instructions may be generated on site or from a remote location. Still, any type of message or instruction may be conveyed to end user **12**.

### CONSOLE

With reference now to Figures 2, 6 and 7, the simulator **10** may include a console **135** housing one or more components of the simulator **10**. In one embodiment, the console **135** may be constructed to resemble a welding power source. That is to say that the shape and size of the console **135** may match that of a real-world device. Operation of the simulator **10** may be facilitated by a welding unit interface **130,** which may be fashioned to resemble welding power source knobs, dials and/or switches **133, 134.** Simulator **10** may further include a display, which may be displaying device **200**. Coded instructions, i.e. software, installed onto the simulator **10** may direct the end user's **12** interaction with the simulator **10** by displaying instructions and/or menu options on the display screen **200**. Interaction with the simulator **10** may include functions relating to: administrative activity or simulation set up and activation. This may include selection of a particular welding process and electrode type, as well as part set up including welding position. Selections made by way of welding unit interface **130** are reflected on the displaying device **200**.

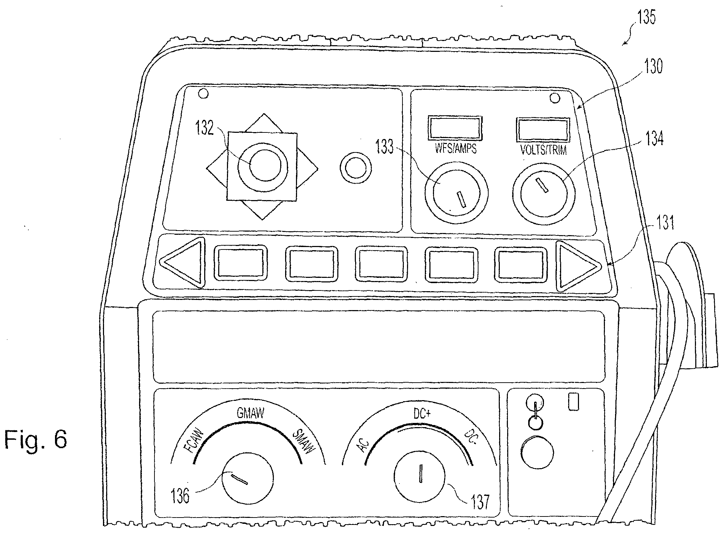

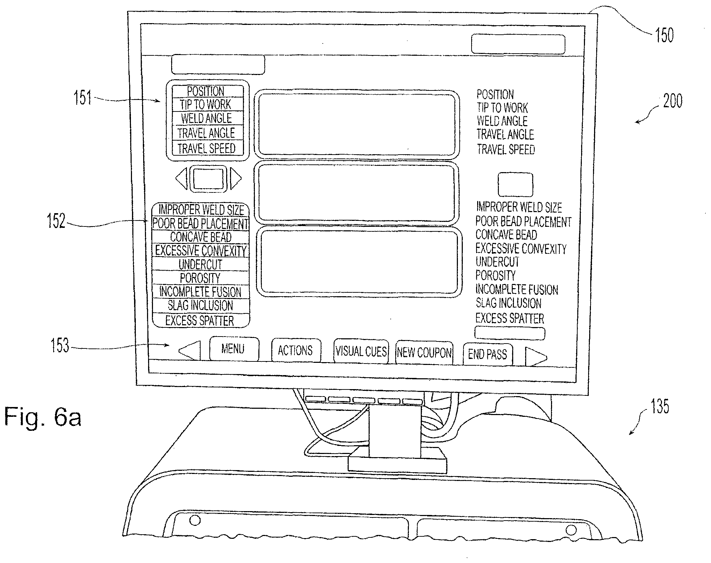

Figure 6 illustrates an exemplary embodiment of the console **135** and welding user interface **130**. The welding unit interface **130** may include a set of buttons **131** corresponding to the user selections **153** used during set up and operation of the simulator **10**. The buttons **131** may be colored to correspond to colors of the user selections **153** displayed on displaying device **200**. When one of the buttons **131** is pressed, a signal is sent to the logic processor-based subsystem **110** to activate the corresponding function. The welding unit interface **130** may also include a joystick **132** capable of being used by a user to select various parameters and selections displayed on the displaying device **200**. The welding unit interface **130** further includes a dial or knob **133**, which in an exemplary manner, may be used for adjusting wire feed speed/amps, and another dial or knob **134** for adjusting volts/trim. The welding unit interface **130** also includes a dial or knob **136** for selecting an arc welding process. In accordance with an embodiment of the present invention, three arc welding processes are selectable including flux cored arc welding (FCAW), gas metal arc welding (GMAW), and shielded metal arc welding (SMAW). The welding unit interface **130** further includes a dial or knob **137** for selecting a welding polarity. In accordance with an embodiment of the present invention, three arc welding polarities are selectable including alternating current (AC), positive direct current (DC+), and negative direct current (DC-). Still, other welding processes and set up features may be incorporated in the simulator **10** without departing from the intended scope of coverage of the embodiments of the subject invention, including but not limited to TIG welding. From the aforementioned, it will be readily seen that set up of the simulator **10** parallels set up of a real-world device.

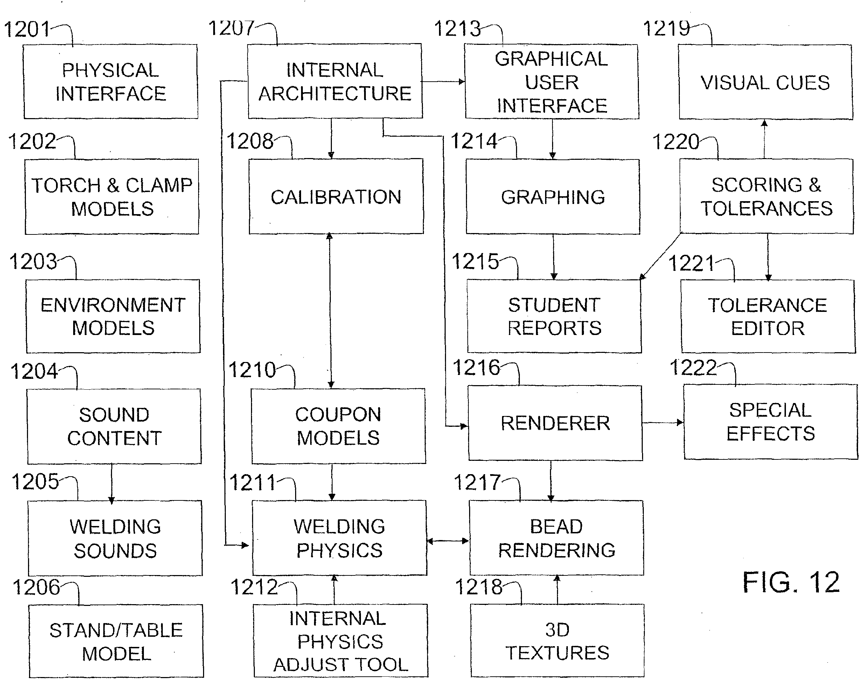

The graphical user interface functionality **1213** (see Figure 12) allows a user, viewable via the observer display device **150** and using the joystick **132** of the physical user interface **130**, to set up a welding scenario. The set up of a welding scenario may include selecting a language, entering an end user name, selecting a practice plate (e.g. a welding coupon, T-plate, flat plate), selecting a welding process (e.g., FCAW, GMAW, SMAW, TIG) and associated axial spray, pulse, or short arc mode of transfer, selecting a gas type and flow rate, selecting a type of stick electrode (e.g., E6010 or E7018), and selecting a type of flux cored wire (e.g., self-shielded, gas-shielded). The set up of a welding scenario may also include setting up a coupon stand **170** to be discussed in detail below. The set up of a welding scenario further includes selecting an environment (e.g., a background environment in virtual reality space), setting a wire feed speed, setting a voltage level, selecting a polarity, and turning particular visual cues on or off. It is noted here that in one embodiment, limitations may be incorporated into the simulator **10,** which may be software limitations, that prevent operation of a given welding scenario until the appropriate settings for a selected process have been properly entered. In this way, trainee users **12a** are taught or learn the proper range of real-world welding settings by setting up virtual welding scenarios.

Accordingly, displaying device **200** reflects activity corresponding to the end user selections **153** including menu, actions, visual cues, new coupon set up, and scoring. These user selections may be tied to user buttons on the console **135**. As a user makes various selections via displaying device **200**, the displayed characteristics can change to provide selected information and other options to the user. However, the displaying device **200**, which may be an observer display device **150**, may have another function, which is to display virtual images seen by the end user **12** during operation of the simulator **10**, i.e. while engaging in virtual welding activity. Displaying device **200** may be set up to view the same image as seen by the end user **12**. Alternatively, displaying device **200** may also be used to display a different view, or different perspective of the virtual welding activity.

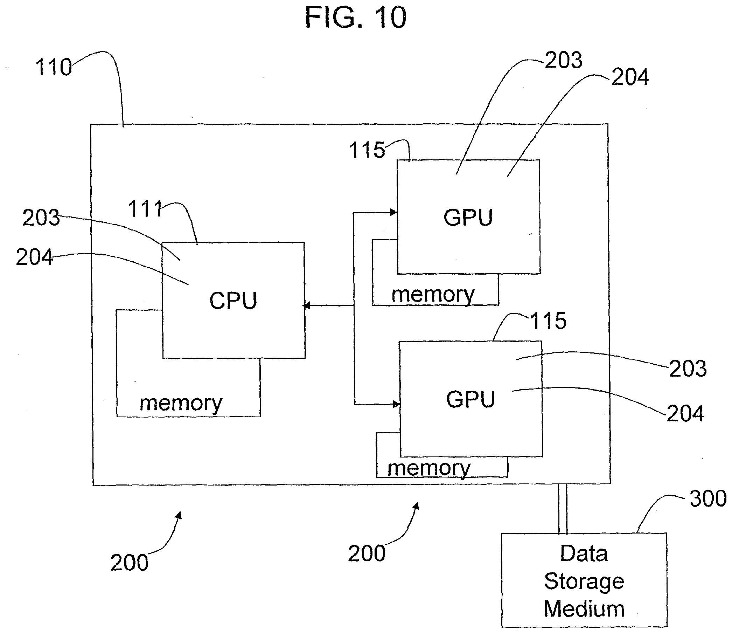

In one embodiment, displaying device **150**, **200** may be used to play back virtual welding activity stored electronically on data storage devices **300**, shown in Figure 10. Data representing the end user's **12** virtual welding activity may be stored for: playback and review, downloaded for archiving purposes and/or transmitted to remote locations for viewing and critiquing in real-time. In replaying the virtual welding activity, details such as weld puddle fluidity, travel speed, as well as discontinuity states **152** including, for example, improper fillet size, poor bead placement, concave bead, excessive convexity, undercut, porosity, incomplete fusion, slag entrapment, excess spatter, and burn-through, may be represented. Undercut may also be displayed, which is the result of an out of tolerance angle. Moreover, porosity may be displayed caused by moving the arc too far away from the weldment. In this manner, the simulator **10** is capable of replaying part or all of particular virtual welding activity, modeling all aspects of the virtual welding scenario including occlusions and defects related directly to the end user's activity.

Referencing Figure 6a, simulator **10** is also capable of analyzing and displaying the results of virtual welding activity. By analyzing the results, it is meant that simulator **10** is capable of determining when during the welding pass and where along the weld joints, the end user **12** deviated from the acceptable limits of the welding process. A score may be attributed to the end user's **12** performance. In one embodiment, the score may be a function of deviation in position, orientation and speed of the mock welding tool **160** through ranges of tolerances, which may extend from an ideal welding pass to marginal or unacceptable welding activity. Any gradient of ranges may be incorporated into the simulator **10** as chosen for scoring the end user's **12** performance. Scoring may be displayed numerically or alpha-numerically. Additionally, the end user's **12** performance may be displayed graphically showing, in time and/or position along the weld joint, how closely the mock welding tool traversed the weld joint. Parameters such as travel angle, work angle, speed, and distance from the weld joint are examples of what may be measured, although any parameters may be analyzed for scoring purposes. The tolerance ranges of the parameters are taken from real-world welding data, thereby providing accurate feedback as to how the end user will perform in the real world. In another embodiment, analysis of the defects corresponding to the end user's **12** performance may also be incorporated and displayed on the displaying device **150**, **200.** In this embodiment, a graph may be depicted indicating what type of discontinuity resulted from measuring the various parameters monitored during the virtual welding activity. While occlusions may not be visible on the displaying device **200**, defects may still have occurred as a result of the end user's **12** performance, the results of which may still be correspondingly displayed, i.e. graphed.

Displaying device **200** may also be used to display tutorial information used to train an end user **12**. Examples of tutorial information may include instructions, which may be displayed graphically as depicted by video or pictures. Additionally, instructions may be written or presented in audio format, mentioned above. Such information may be stored and maintained on the data storage devices **300**. In one embodiment, simulator **10** is capable of displaying virtual welding scenes showing various welding parameters **151** including position, tip to work, weld angle, travel angle, and travel speed, termed herein as visual cues.

In one embodiment, remote communications may be used to provide virtual instruction by offsite personnel, i.e. remote users, working from similarly or dissimilarly constructed devices, i.e. simulators. Portraying a virtual welding process may be accomplished via a network connection including but not limited to the internet, LANs, and other means of data transmission. Data representing a particular weld (including performance variables) may be sent to another system capable of displaying the virtual image and/or weld data. It should be noted that the transmitted data is sufficiently detailed for allowing remote user(s) to analyze the welder's performance. Data sent to a remote system may be used to generate a virtual welding environment thereby recreating a particular welding process. Still, any way of communicating performance data or virtual welding activity to another device may be implemented without departing from the intended scope of coverage of the embodiments of the subject invention.

### WELDING COUPON

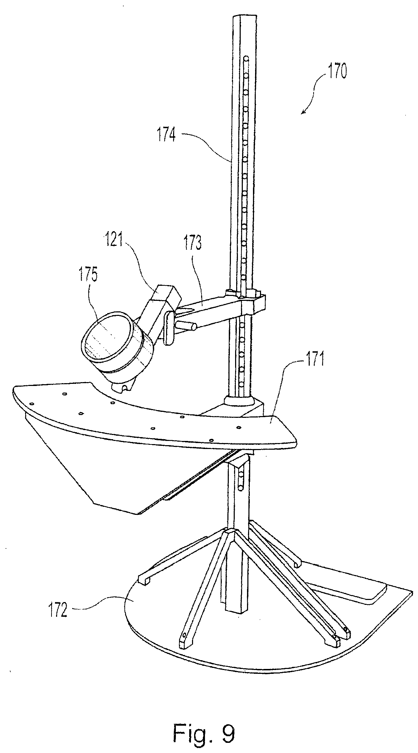

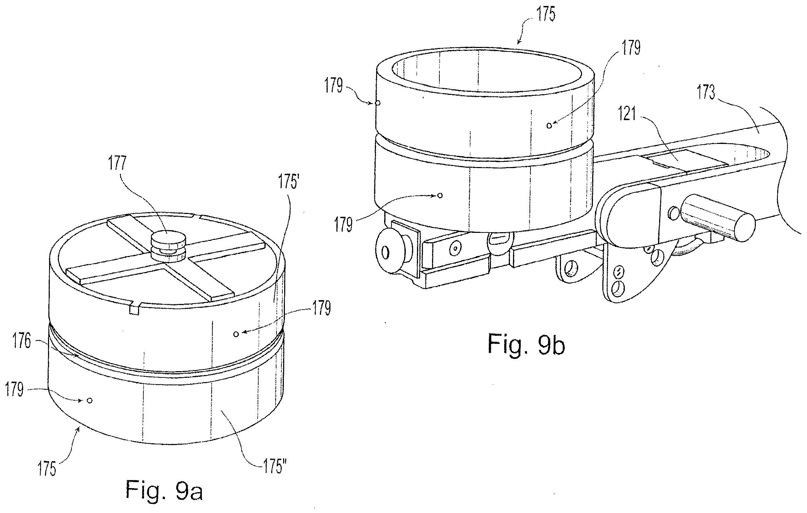

With reference now to Figures 1, 9a and 9b, simulator **10** may include a welding coupon **175** that resembles pipe sections juxtaposed to form a welding joint **176**. The welding coupon **175** may work in conjunction with the simulator **10** serving as a guide for the end user **12** while engaging in virtual welding activity. A plurality of welding coupons **175** may be used, that is to say interchanged for use in a given cycle of virtual welding activity. The types of welding coupons may include cylindrical pipe sections, arcuate pipe segments, flat plate and T-plate weld joints, just to name a few. In one embodiment, each of the welding coupons may incorporate open root joints or grooves. However, any configurations of weld joints may be incorporated into a welding coupon without departing from the intended scope of coverage of the embodiments of the subject invention.

The dimensions of welding coupons **175** may vary. For cylindrical pipe, the range of inside diameters may extend from 1½ inches (inside diameter) to 18 inches (inside diameter). In one particular embodiment, the range of inside diameters may exceed 18 inches. In another embodiment, arcuate pipe segments may have a characteristic radius in the range extending from 1½ inches (inside diameter) up to and exceeding 18 inches (inside diameter). Furthermore, it is to be construed that any inside diameter of welding coupon **175** may be utilized, both those smaller than 1 ½ inches and those exceeding 18 inches. In a practical sense, any size of welding coupon **175** can be used as long as the welding coupon **175**, or a portion of the welding coupon **175**, fits within the envelope generated by the spatial tracker **120**. Flat plate may extend up to and exceed 18 inches in length as well. Still, it is to be understood that the upper dimensional limits of a welding coupon **175** are constrained only by the size and strength of the sensing field generated by the spatial tracker **120** and its ability to be positioned respective of the welding coupon **175**. All such variations are to be construed as falling within the scope of coverage of the embodiments of the subject invention.

As mentioned above, the welding coupon **175** may be constructed from a material that does not interfere with the spatial tracker **120**. For spatial trackers generating a magnetic field, the welding coupon **175** may be constructed from non-ferrous and non-conductive material. However, any type of material may be chosen that is suitable for use with the type of spatial tracker **120** or other sensors selected.

Referencing Figures 9a and 9b, the welding coupon **175** may be constructed so that it fits into a table or stand **170**, which functions (at least in part) to hold the welding coupon **175** constant with respect to the spatial tracker **120**. Accordingly, the welding coupon **175** may include a connecting portion **177** or connector **177**. The connecting portion **177** may extend from one side of the welding coupon **175**, which as illustrated may be the bottom side, and may be received into a mechanical interlocking device included with the stand **170**. It will be appreciated that the orientation at which the welding coupon **175** is inserted into the stand **170** may need to be constant, i.e. repeatable, for closely matching the virtual weldment, i.e. pipe, created within the virtual welding environment **15**. In this manner, as long as the simulator **10** is aware of how the position of the welding coupon **175** has changed, adjustments to the virtual counterpart may be made accordingly. For example, during set up, the end user **12** may select the size of pipe to be welded on. The end user **12** may then insert the appropriate welding coupon **175** into the stand **170**, locking it into position. Subsequently, the end user **12** may choose a desired welding position making the selection via the welding user interface **130**. As will be described below, the stand **170** may then be tilted or adjusted to position the welding coupon **175** in any of the welding positions recognized by the simulator **10**. Of course, it will be appreciated that adjusting the position of the welding coupon **175** also adjusts the position of the spatial tracker **120** thereby preserving the relative position of the welding coupon **175** within the sensory tracking field.

Figure 9 depicts one embodiment of the stand **170**. The stand **170** may include an adjustable table **171**, a stand base **172**, an adjustable arm **173**, and a vertical post **174**. The table **171** and the arm **173** are respectively attached to the vertical post **174**. The table **171** and the arm **173** are each capable of being adjusted along the height of the vertical post **174**, which may include upward, downward, and/or rotational movement with respect to the vertical post **174**. The arm **173** is used to hold the welding coupon **175**, in a manner consistent with that discussed herein. The table **171** may assist the end user **12** by allowing his/her arms to rest on the table **171** during use. In one particular embodiment, the vertical post **174** is indexed with position information such that a user may know exactly where the arm **173** and the table **171** are positioned. This information may also be entered into the simulator **10** by way of the welding user interface **130** and the displaying device **150** during set up.

An alternative embodiment of the subject invention is contemplated wherein the positions of the table **171** and the arm **173** are automatically adjusted responsive to selections made during set up of the simulator **10**. In this embodiment, selections made via the welding user interface **130** may be communicated to the logic processor-based subsystem **110**. Actuators and feedback sensors employed by the stand **170** may be controlled by the logic processor-based subsystem **110** for positioning the welding coupon **175** without physically moving the arm **173** or the table **171**. In one embodiment, the actuators and feedback sensors may comprise electrically driven servomotors. However, any locomotive device may be used to automatically adjust the position of the stand **170** as chosen with sound engineering judgment. In this manner, the process of setting up the welding coupon **175** is automated and does not require manual adjustment by the end user **12**.

Another embodiment of the subject invention includes the use of intelligence devices used in conjunction with the welding coupon **175**, termed herein as "smart" coupons **175**. In this embodiment, the welding coupon **175** includes a device having information about that particular welding coupon **175** that may be sensed by the stand **170**. In particular, the arm **173** may include detectors that read data stored on or within the device located on the welding coupon **175**. Examples may include the use of digital data encoded on a sensor, e.g. micro-electronic device, that may be read wirelessly when brought into proximity of the detectors. Other examples may include the use of passive devices like bar coding. Still any manner of intelligently communicating information about the welding coupon **175** to the logic processor-based subsystem **110** may be chosen with sound engineering judgment.

The data stored on the welding coupon **175** may automatically indicate, to the simulator **10**, the kind of welding coupon **175** that has been inserted in the stand **170**. For example, a 2-inch pipe coupon may include information related to its diameter. Alternatively, a flat plate coupon may include information that indicates the kind of weld joint included on the coupon, e.g. groove weld joint or a butt weld joint, as well as its physical dimensions. In this manner, information about the welding coupon **175** may be used to automate that portion of the setup of the simulator **10** related to selecting and installing a welding coupon **175**.

Calibration functionality **1208** (see Figure 12) provides the capability to match up physical components in real world space (3D frame of reference) with visual components in the virtual welding environment **15**. Each different type of welding coupon **175** is calibrated in the factory by mounting the welding coupon **175** to the arm **173** of the stand **170** and touching the welding coupon **175** at predefined points **179** (indicated by, for example, three dimples **179** on the welding coupon **175**) with a calibration stylus operatively connected to the stand **170**. The simulator **10** reads the magnetic field intensities at the predefined points **179**, provides position information to the logic processor-based subsystem **110**, and the logic processor-based subsystem **110** uses the position information to perform the calibration (i.e., the translation from real world space to virtual reality space).

Any part of the same type of welding coupon **175**, accordingly, fits into the arm **173** of the stand **170** in the same repeatable way to within very tight tolerances. Therefore, once a particular type welding coupon **175** is calibrated, repeated calibration of similar coupons is not necessary, i.e. calibration of a particular type of welding coupon **175** is a one-time event. Stated differently, welding coupons **175** of the same type are interchangeable. Calibration ensures that physical feedback perceived by the user during a welding process matches up with what is displayed to the user in virtual reality space, making the simulation seem more real. For example, if the user slides the tip of a mock welding tool **160** around the corner of an actual welding coupon **175**, the user will see the tip sliding around the corner of the virtual welding coupon on the displaying device **200** as the user feels the tip sliding around the actual corner. In accordance with an embodiment of the present invention, the mock welding tool **160** may also be placed in a pre-positioned jig and calibrated in a similar manner, based on the known jig position.

In accordance with another embodiment of the subject invention, "smart" coupons may include sensors that allow the simulator **10** to track the pre-defined calibration point, or corners of the "smart" coupon. The sensors may be mounted on the welding coupon **175** at the precise location of the predefined calibration points. However, any manner of communicating calibration data to the simulator **10** may be chosen. Accordingly, the simulator **10** continuously knows where the "smart" coupon is in real world 3D space. Furthermore, licensing keys may be provided to "unlock" welding coupons **175**. When a particular welding coupon **175** is purchased, a licensing key may be provided that allows the end user **12a, 12b** to enter the licensing key into the simulator **10,** unlocking the software associated with that particular welding coupon **175**. In an alternative embodiment, special non-standard welding coupons may be provided based on real-world CAD drawings of parts.

### PROCESSOR-BASED SYSTEM

With reference now to Figures 2, 4 and 10, as mentioned above, simulator **10** includes a logic processor-based subsystem **110,** which may comprise programmable electronic circuitry **200** for executing coded instructions used to generate the virtual welding environment **15**. The programmable electronic circuitry **200** may include one or more logic processors **203** or logic processor-based systems **203**, which may be comprised of one or more microprocessors **204**. In one particular embodiment, the programmable electronic circuitry **200** may be comprised of central processing unit(s) (CPU) and graphics processing unit(s) (GPU), to be discussed further below. Additional circuitry may be included, like for example electronic memory, i.e. RAM, ROM, as well as other peripheral support circuitry. It is noted that electronic memory may be included for both the CPU and the GPU, each of which may be separately programmable for use in rendering aspects of the virtual welding environment **15** as described herein. Moreover, the programmable electronic circuitry **200** may include and utilize data storage devices **300** such as hard disk drives, optical storage devices, flash memory and the like. Still other types of electronic circuitry may be included that facilitate the transfer of data between devices within the simulator **10** or between different simulators **10.** This may include, for example, receiving data from one or more input devices **155**, e.g. spatial tracker or sensor, or transferring data over one or more networks which may be a local area networks (LAN), a wide area network (WAN) and/or Internet. It is to be understood that the aforementioned devices and processes are exemplary in nature and should not be construed as limiting. In fact, any form of programmable circuitry, support circuitry, communication circuitry and/or data storage may be incorporated into the embodiments of the subject invention as chosen with sound engineering judgment.

Figure 10 illustrates an example embodiment of a subsystem block diagram of the logic processor-based subsystem **110** of the simulator **10**. The logic processor-based subsystem **110** may include a central processing unit (CPU) **111** and two graphics processing units (GPU) **115**. The two GPUs **115** may be programmed to provide virtual reality simulation of a weld puddle having real-time molten metal fluidity and heat absorption and dissipation characteristics.

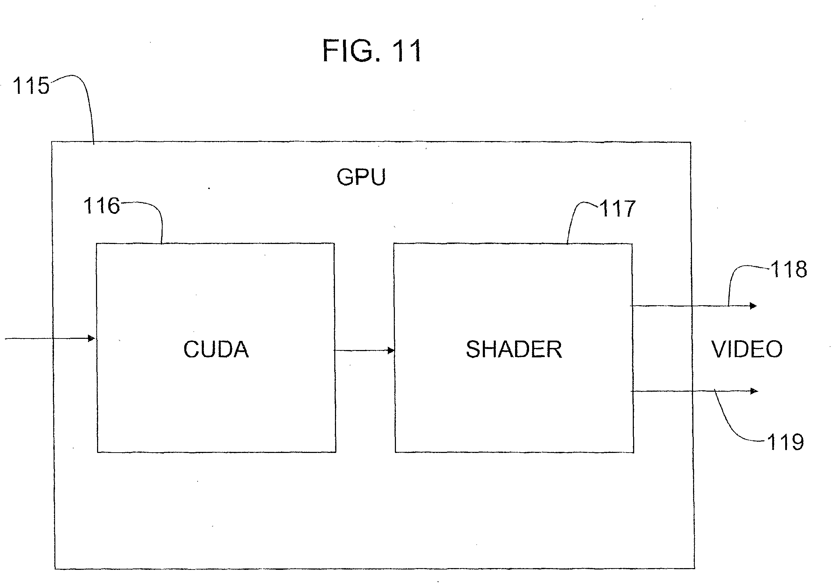

With reference to Figure 11, a block diagram of the graphics processing unit (GPU) **115** is shown. Each GPU **115** supports the implementation of data parallel algorithms. In accordance with an embodiment of the present invention, each GPU **115** provides two video outputs **118** and **119** capable of providing two virtual reality views. Two of the video outputs may be routed to the face-mounted display device **140**, rendering the welder's point of view, and a third video output may be routed to the observer display device **150**, for example, rendering either the welder's point of view or some other point of view. The remaining fourth video output may be routed to a projector, for example, or used for any other purpose suitable for simulating a virtual welding environment **15**. Both GPUs **115** may perform the same welding physics computations but may render the virtual welding environment **15** from the same or different points of view. The GPU **115** includes a computed unified device architecture (CUDA) **116** and a shader **117**. The CUDA **116** is the computing engine of the GPU **115** which is accessible to software developers through industry standard programming languages. The CUDA **116** includes parallel cores and is used to run the physics model of the weld puddle simulation described herein. The CPU **111** provides real-time welding input data to the CUDA **116** on the GPU **115**. In one particular embodiment, the shader **117** is responsible for drawing and applying all of the visuals of the simulation. Bead and puddle visuals are driven by the state of a wexel displacement map which is described later herein. In accordance with an embodiment of the present invention, the physics model runs and updates at a rate of about 30 times per second.

Figure 12 illustrates an example embodiment of a functional block diagram of the simulator **10**. The various functional blocks of the simulator **10** may be implemented largely via software instructions and modules running on the logic processor-based subsystem **110**. The various functional blocks of the simulator **10** include a physical interface **1201,** torch and clamp models **1202**, environment models **1203**, sound content functionality **1204**, welding sounds **1205**, stand/table model **1206**, internal architecture functionality **1207**, calibration functionality **1208**, coupon models **1210**, welding physics **1211,** internal physics adjustment tool (tweaker) **1212**, graphical user interface functionality **1213**, graphing functionality **1214**, student reports functionality **1215**, renderer **1216,** bead rendering **1217**, 3D textures **1218**, visual cues functionality **1219**, scoring and tolerance functionality **1220**, tolerance editor **1221**, and special effects **1222**.

The internal architecture functionality **1207** provides the higher level software logistics of the processes of the simulator **10** including, for example, loading files, holding information, managing threads, turning the physics model on, and triggering menus. The internal architecture functionality **1207** runs on the CPU **111**, in accordance with an embodiment of the present invention. Certain real-time inputs to the logic processor-based subsystem **110** include arc location, gun position, face-mounted display device or helmet position, gun on/off state, and contact made state (yes/no).

During a simulated welding scenario, the graphing functionality **1214** gathers user performance parameters and provides the user performance parameters to the graphical user interface functionality **1213** for display in a graphical format (e.g., on the observer display device **150**). Tracking information from the spatial tracker **120** feeds into the graphing functionality **1214**. The graphing functionality **1214** includes a simple analysis module (SAM) and a whip/weave analysis module (WWAM). The SAM analyzes user welding parameters including welding travel angle, travel speed, weld angle, position, and tip to work by comparing the welding parameters to data stored in bead tables. The WWAM analyzes user whipping parameters including dime spacing, whip time, and puddle time. The WWAM also analyzes user weaving parameters including width of weave, weave spacing, and weave timing. The SAM and WWAM interpret raw input data (e.g., position and orientation data) into functionally usable data for graphing. For each parameter analyzed by the SAM and the WWAM, a tolerance window is defined by parameter limits around an optimum or ideal set point input into bead tables using the tolerance editor **1221**, and scoring and tolerance functionality **1220** is performed.

The tolerance editor **1221** includes a weldometer which approximates material usage, electrical usage, and welding time. Furthermore, when certain parameters are out of tolerance, welding discontinuities (i.e., welding defects) may occur. The state of any welding discontinuities are processed by the graphing functionality **1214** and presented via the graphical user interface functionality **1213** in a graphical format. Such welding discontinuities include fillet size, poor bead placement, concave bead, excessive convexity, undercut, porosity, incomplete fusion, slag entrapment, and excess spatter. In accordance with an embodiment of the present invention, the level or amount of a discontinuity is dependent on how far away a particular user parameter is from the optimum or ideal set point.

Different parameter limits may be pre-defined for different types of users such as, for example, welding novices, welding experts, and persons at a trade show. The scoring and tolerance functionality **1220** provide number scores depending on how close to optimum (ideal) a user is for a particular parameter and depending on the level of discontinuities or defects present in the weld. Information from the scoring and tolerance functionality **1220** and from the graphics functionality **1214** may be used by the student reports functionality **1215** to create a performance report for an instructor and/or a student.

Visual cues functionality **1219** provide immediate feedback to the user by displaying overlaid colors and indicators on the face mounted display device **140** and/or the observer display device **150**. Visual cues are provided for each of the welding parameters **151** including position, tip to work, weld angle, travel angle, and travel speed and visually indicate to the user if some aspect of the user's welding technique should be adjusted based on the predefined limits or tolerances. Visual cues may also be provided for whip/weave technique and weld bead "dime" spacing, for example.

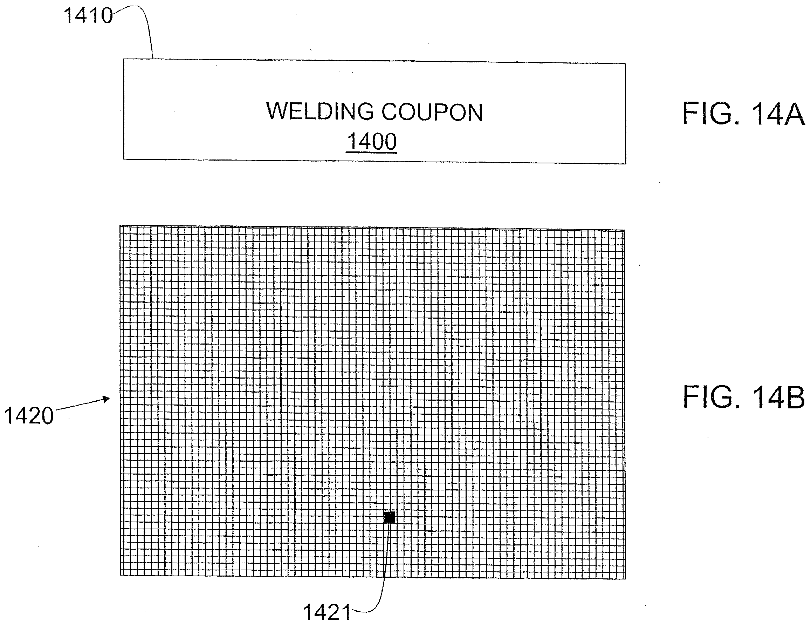

In accordance with an embodiment of the present invention, simulation of a weld puddle or pool in virtual reality space is accomplished where the simulated weld puddle has real-time molten metal fluidity and heat dissipation characteristics. At the heart of the weld puddle simulation is the welding physics functionality **1211** (a.k.a., the physics model) which may be executed on the GPUs **115**, in accordance with an embodiment of the present invention. The welding physics functionality employs a double displacement layer technique to accurately model dynamic fluidity/viscosity, solidity, heat gradient (heat absorption and dissipation), puddle wake, and bead shape, and is described in more detail herein with respect to Figure. 14a-14c.

The welding physics functionality **1211** communicates with the bead rendering functionality **1217** to render a weld bead in all states from the heated molten state to the cooled solidified state. The bead rendering functionality **1217** uses information from the welding physics functionality **1211** (e.g., heat, fluidity, displacement, dime spacing) to accurately and realistically render a weld bead in virtual reality space in real-time. The 3D textures functionality **1218** provides texture maps to the bead rendering functionality **1217** to overlay additional textures (e.g., scorching, slag, grain) onto the simulated weld bead. The renderer functionality **1216** is used to render various non-puddle specific characteristics using information from the special effects module **1222** including sparks, spatter, smoke, arc glow, fumes, and certain discontinuities such as, for example, undercut and porosity.

The internal physics adjustment tool **1212** is a tweaking tool that allows various welding physics parameters to be defined, updated, and modified for the various welding processes. In accordance with an embodiment of the present invention, the internal physics adjustment tool **1212** runs on the CPU **111**, and the adjusted or updated parameters are downloaded to the GPUs **115**. The types of parameters that may be adjusted via the internal physics adjustment tool **1212** include parameters related to welding coupons, process parameters that allow a process to be changed without having to reset a welding coupon (allows for doing a second pass), various global parameters that can be changed without resetting the entire simulation, and other various parameters.

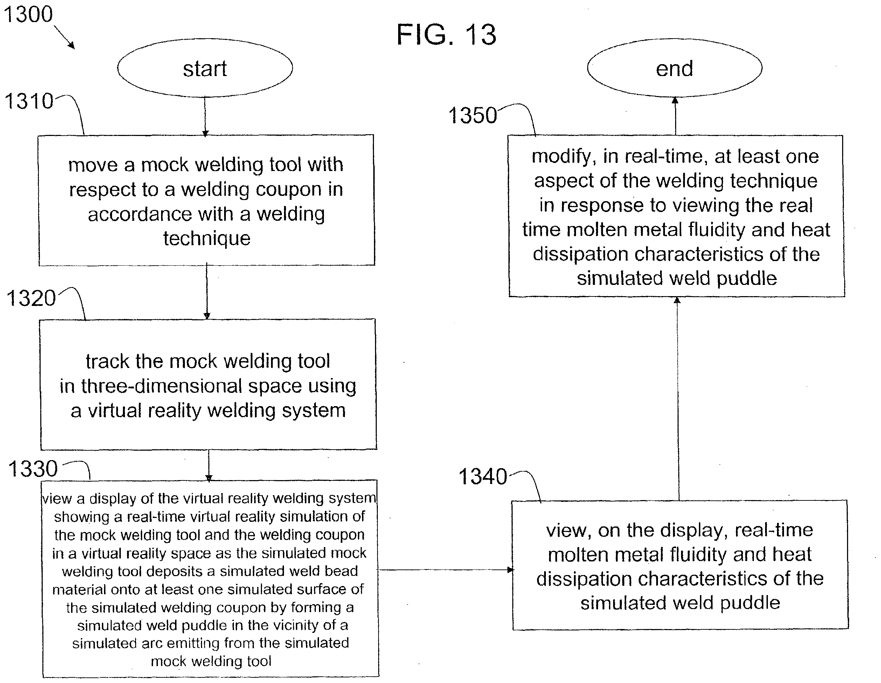

Figure 13 is a flow chart of an embodiment of a method **1300** of training using the virtual reality training simulator **10**. In step **1310**, move a mock welding tool with respect to a welding coupon in accordance with a welding technique. In step **1320**, track position and orientation of the mock welding tool in three-dimensional space using a virtual reality system. In step **1330**, view a display of the virtual reality welding system showing a real-time virtual reality simulation of the mock welding tool and the welding coupon in a virtual reality space as the simulated mock welding tool deposits a simulated weld bead material onto at least one simulated surface of the simulated welding coupon by forming a simulated weld puddle in the vicinity of a simulated arc emitting from said simulated mock welding tool. In step **1340**, view on the display, real-time molten metal fluidity and heat dissipation characteristics of the simulated weld puddle. In step **1350**, modify in real-time, at least one aspect of the welding technique in response to viewing the real-time molten metal fluidity and heat dissipation characteristics of the simulated weld puddle.

The method **1300** illustrates how a user is able to view a weld puddle in virtual reality space and modify his welding technique in response to viewing various characteristics of the simulated weld puddle, including real-time molten metal fluidity (e.g., viscosity) and heat dissipation. The user may also view and respond to other characteristics including real-time puddle wake and dime spacing. Viewing and responding to characteristics of the weld puddle is how many welding operations are actually performed in the real world. The double displacement layer modeling of the welding physics functionality **1211** run on the GPUs **115** allows for such real-time molten metal fluidity and heat dissipation characteristics to be accurately modeled and represented to the user. For example, heat dissipation determines solidification time (i.e., how much time it takes for a wexel to completely solidify).

Furthermore, a user may make a second pass over the weld bead material using the same or a different (e.g., a second) mock welding tool, welding electrode and/or welding process. In such a second pass scenario, the simulation shows the simulated mock welding tool, the welding coupon, and the original simulated weld bead material in virtual reality space as the simulated mock welding tool deposits a second simulated weld bead material merging with the first simulated weld bead material by forming a second simulated weld puddle in the vicinity of a simulated arc emitting from the simulated mock welding tool. Additional subsequent passes using the same or different welding tools or processes may be made in a similar manner. In any second or subsequent pass, the previous weld bead material is merged with the new weld bead material being deposited as a new weld puddle is formed in virtual reality space from the combination of any of the previous weld bead material, the new weld bead material, and possibly the underlying coupon material in accordance with certain embodiments of the present invention. Such subsequent passes may be performed to repair a weld bead formed by a previous pass, for example, or may include a heat pass and one or more gap closing passes after a root pass as is done in pipe welding. In accordance with various embodiments of the present invention, base and weld bead material may be simulated to include mild steel, stainless steel, and aluminum.

In accordance with an embodiment of the present invention, welding with stainless steel materials is simulated in a real-time virtual environment. The base metal appearance is simulated to provide a realistic representation of a stainless steel weldment. Simulation of the visual effect is provided to change the visual spectrum of light to accommodate the coloration of the arc. Realistic sound is also simulated based on proper work distance, ignition, and speed. The arc puddle appearance and deposition appearance are simulated based on the heat affected zone and the torch movement. Simulation of dross or broken particles of aluminum oxide or aluminum nitride films, which can be scattered throughout the weld bead, is provided. Calculations related to the heating and cooling affected zones are tailored for stainless steel welding. Discontinuity operations related to spatter are provided to more closely and accurately simulate the appearance of stainless steel GMAW welding.

In accordance with an embodiment of the present invention, welding with aluminum materials is simulated in a real-time virtual environment. The bead wake is simulated to closely match the appearance of the aluminum welding to that seen in the real world. The base metal appearance is simulated to represent a realistic representation of an aluminum weldment. Simulation of the visual effect is provided to change the visual spectrum of light to accommodate the coloration of the arc. A calculation of lighting is provided to create reflectivity. Calculations related to the heating and cooling affected zones are tailored for aluminum welding. Simulation of oxidation is provided to create a realistic "cleaning action". Realistic sound is also simulated based on proper work distance, ignition, and speed. The arc puddle appearance and deposition appearance are simulated based on the heat affected zone and the torch movement. The appearance of the aluminum wire is simulated in the GMAW torch to provide a realistic and proper appearance.

In accordance with an embodiment of the present invention, GTAW welding is simulated in a real-time virtual environment. Simulation of operational parameters for GTAW welding are provided including, but not limited to, flow rate, pulsing frequency, pulse width, arc voltage control, AC balance, and output frequency control. Visual representation of the puddle "splash" or dipping technique and melt off of the welding consumable are also simulated. Furthermore, representations of autogenous (no filler metal) and GTAW with filler metal welding operations in the welding puddle are rendered visually and audibly. Implementation of additional filler metal variations may be simulated including, but not limited to, carbon steel, stainless steel, aluminum, and Chrome Moly. A selectable implementation of an external foot pedal may be provided for operation while welding.

### ENGINE FOR MODELING

Figures 14a-14b illustrate the concept of a welding element (wexel) displacement map **1420**, in accordance with an embodiment of the present invention. Figure 14a shows a side view of a flat welding coupon **1400** having a flat top surface **1410**. The welding coupon **1400** exists in the real world as, for example, a plastic part, and also exists in virtual reality space as a simulated welding coupon. Figure 14b shows a representation of the top surface **1410** of the simulated welding coupon **1400** broken up into a grid or array of welding elements, termed "wexels" forming a wexel map **1420**. Each wexel (e.g., wexel **1421**) defines a small portion of the surface **1410** of the welding coupon. The wexel map defines the surface resolution. Changeable channel parameter values are assigned to each wexel, allowing values of each wexel to dynamically change in real-time in virtual reality weld space during a simulated welding process. The changeable channel parameter values correspond to the channels Puddle (molten metal fluidity/viscosity displacement), Heat (heat absorption/dissipation), Displacement (solid displacement), and Extra (various extra states, e.g., slag, grain, scorching, virgin metal). These changeable channels are referred to herein as PHED for Puddle, Heat, Extra, and Displacement, respectively.

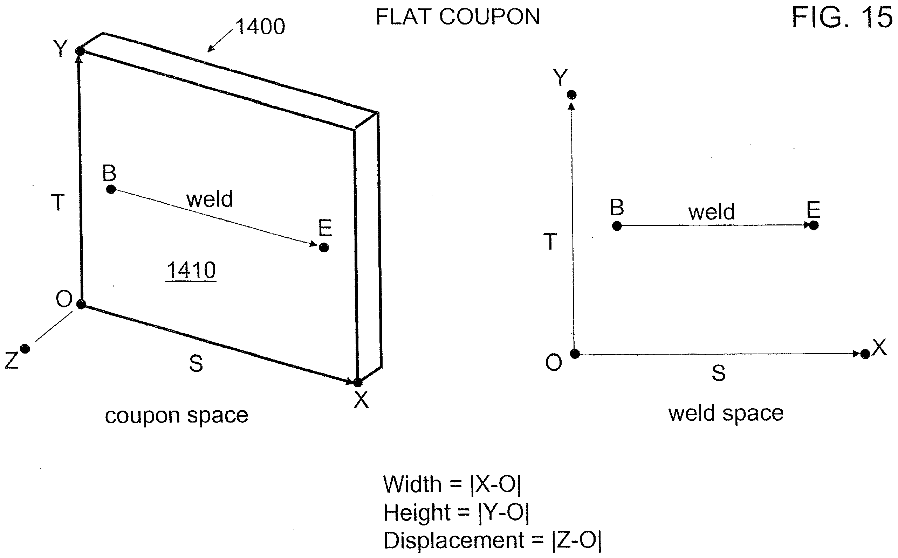

Figure 15 illustrates an example embodiment of a coupon space and a weld space of the flat welding coupon **1400** of Figure 14 simulated in the simulator **10** of Figures 1 and 2. Points O, X, Y, and Z define the local 3D coupon space. In general, each coupon type defines the mapping from 3D coupon space to 2D virtual reality weld space. The wexel map **1420** of Figure 14 is a two-dimensional array of values that map to weld space in virtual reality. A user is to weld from point B to point E as shown in Figure 15. A trajectory line from point B to point E is shown in both 3D coupon space and 2D weld space in Figure 15.

Each type of coupon defines the direction of displacement for each location in the wexel map. For the flat welding coupon of Figure 15, the direction of displacement is the same at all locations in the wexel map (i.e., in the Z-direction). The texture coordinates of the wexel map are shown as S, T (sometimes called U, V) in both 3D coupon space and 2D weld space, in order to clarify the mapping. The wexel map is mapped to and represents the rectangular surface **1410** of the welding coupon **1400**.

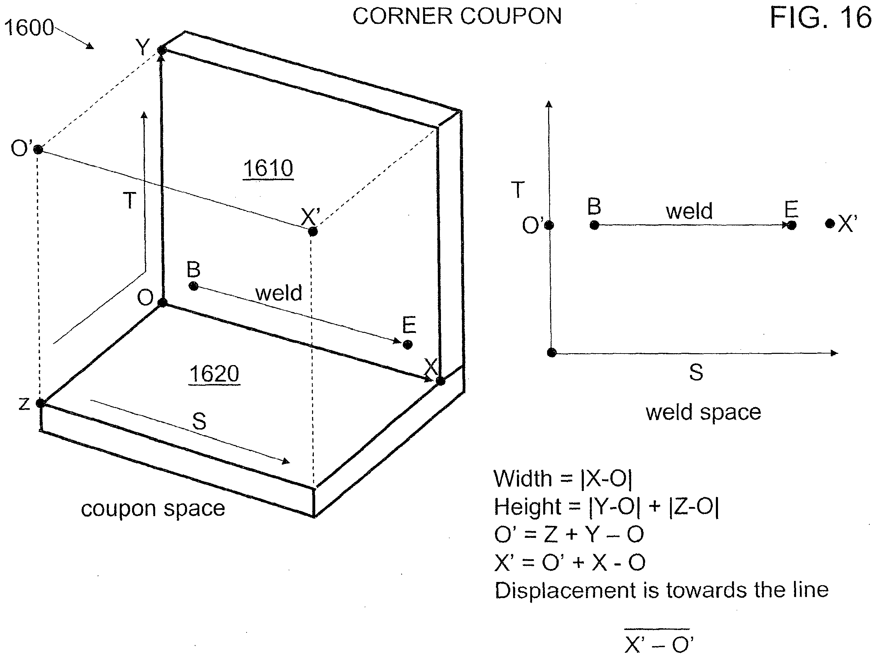

Figure 16 illustrates an example embodiment of a coupon space and a weld space of a corner welding coupon **1600** simulated in the simulator **10**. The corner welding coupon **1600** has two surfaces **1610** and **1620** in 3D coupon space that are mapped to 2D weld space as shown in Figure 16. Again, points O, X, Y, and Z define the local 3D coupon space. The texture coordinates of the wexel map are shown as S, T in both 3D coupon space and 2D weld space, in order to clarify the mapping. A user is to weld from point B to point E as shown in Figure 16. A trajectory line from point B to point E is shown in both 3D coupon space and 2D weld space in Figure 16. However, the direction of displacement is towards the line X'-O' as shown in the 3D coupon space, towards the opposite corner.

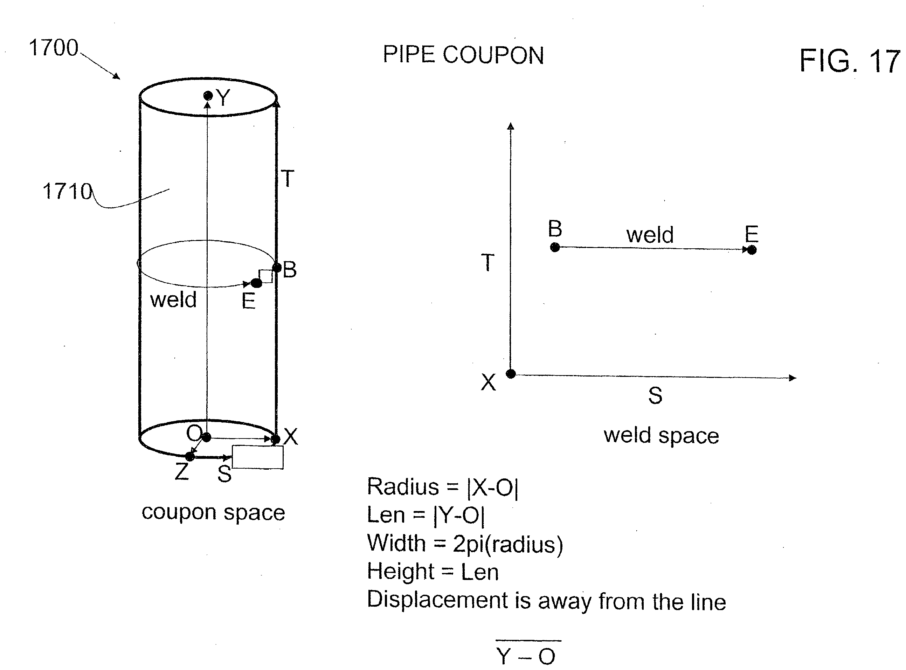

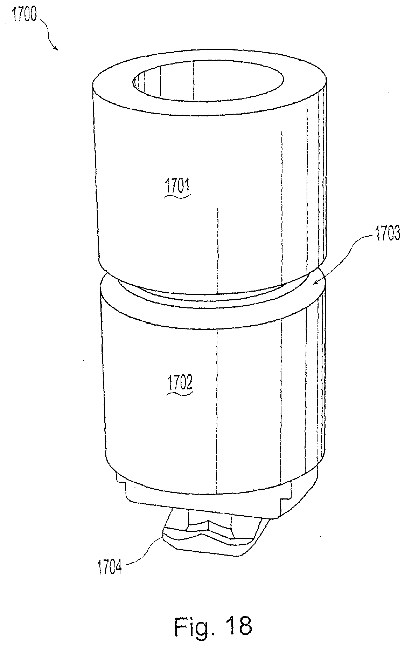

Figure 17 illustrates an example embodiment of a coupon space and a weld space of a pipe welding coupon **1700** simulated in the simulator **10**. The pipe welding coupon **1700** has a curved surface **1710** in 3D coupon space that is mapped to 2D weld space. Points O, X, Y, and Z once again define the local 3D coupon space. The texture coordinates of the wexel map are shown as S, T in both 3D coupon space and 2D weld space, in order to clarify the mapping. An end user **12** is to weld from point B to point E along a curved trajectory as shown in Figure 17. A trajectory curve and line from point B to point E is shown in 3D coupon space and 2D weld space, respectively. The direction of displacement is away from the line Y-O (i.e., away from the center of the pipe). Figure 18 illustrates an example embodiment of the pipe welding coupon **1700** of Figure 17. The pipe welding coupon **1700** is made of a non-ferric, non-conductive plastic and simulates two pipe pieces **1701** and **1702** coming together to form a root joint **1703**. An attachment piece **1704** for attaching to the arm **173** of the stand **170** is also shown.

In a similar manner that a texture map may be mapped to a rectangular surface area of a geometry, a weldable wexel map may be mapped to a rectangular surface of a welding coupon. Each element of the weldable map is termed a wexel in the same sense that each element of a picture is termed a pixel (a contraction of picture element). A pixel contains channels of information that define a color (e.g., red, green, blue, etc.). A wexel contains channels of information (e.g., P, H, E, D) that define a weldable surface in virtual reality space.

In accordance with an embodiment of the present invention, the format of a wexel is summarized as channels PHED (Puddle, Heat, Extra, Displacement) which contains four floating point numbers. The Extra channel is treated as a set of bits which store logical information about the wexel such as, for example, whether or not there is any slag at the wexel location. The Puddle channel stores a displacement value for any liquefied metal at the wexel location. The Displacement channel stores a displacement value for the solidified metal at the wexel location. The Heat channel stores a value giving the magnitude of heat at the wexel location. In this way, the weldable part of the coupon can show displacement due to a welded bead, a shimmering surface "puddle" due to liquid metal, color due to heat, etc. All of these effects are achieved by the vertex and pixel shaders applied to the weldable surface.

In accordance with an embodiment of the present invention, a displacement map and a particle system are used where the particles can interact with each other and collide with the displacement map. The particles are virtual dynamic fluid particles and provide the liquid behavior of the weld puddle but are not rendered directly (i.e., are not visually seen directly). Instead, only the particle effects on the displacement map are visually seen. Heat input to a wexel affects the movement of nearby particles. There are two types of displacement involved in simulating a welding puddle which include Puddle and Displacement. Puddle is "temporary" and only lasts as long as there are particles and heat present. Displacement is "permanent". Puddle displacement is the liquid metal of the weld which changes rapidly (e.g., shimmers) and can be thought of as being "on top" of the Displacement. The particles overlay a portion of a virtual surface displacement map (i.e., a wexel map). The Displacement represents the permanent solid metal including both the initial base metal and the weld bead that has solidified.

In accordance with an embodiment of the present invention, the simulated welding process in virtual reality space works as follows: Particles stream from the emitter (emitter of the simulated mock welding tool **160**) in a thin cone. The particles make first contact with the surface of the simulated welding coupon where the surface is defined by a wexel map. The particles interact with each other and the wexel map and build up in real-time. More heat is added the nearer a wexel is to the emitter. Heat is modeled in dependence on distance from the arc point and the amount of time that heat is input from the arc. Certain visuals (e.g., color, etc.) are driven by the heat. A weld puddle is drawn or rendered in virtual reality space for wexels having enough heat. Wherever it is hot enough, the wexel map liquefies, causing the Puddle displacement to "raise up" for those wexel locations. Puddle displacement is determined by sampling the "highest" particles at each wexel location. As the emitter moves on along the weld trajectory, the wexel locations left behind cool. Heat is removed from a wexel location at a particular rate. When a cooling threshold is reached, the wexel map solidifies. As such, the Puddle displacement is gradually converted to Displacement (i.e., a solidified bead). Displacement added is equivalent to Puddle removed such that the overall height does not change. Particle lifetimes are tweaked or adjusted to persist until solidification is complete. Certain particle properties that are modeled in the simulator **10** include attraction/repulsion, velocity (related to heat), dampening (related to heat dissipation), direction (related to gravity).

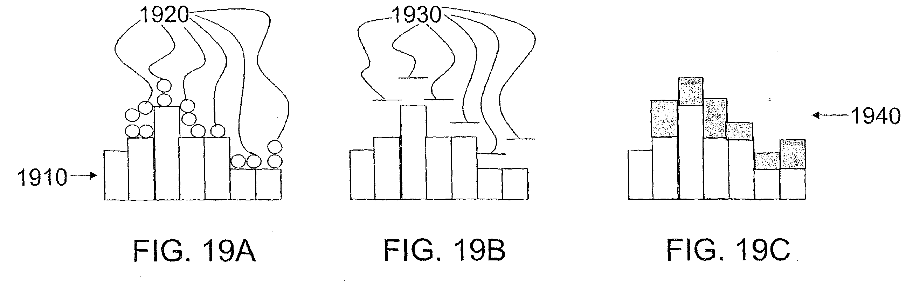

Figures 19a-19c illustrate an example embodiment of the concept of a dual-displacement (displacement and particles) puddle model of the simulator **10**. Welding coupons are simulated in virtual reality space having at least one surface. The surfaces of the welding coupon are simulated in virtual reality space as a double displacement layer including a solid displacement layer and a puddle displacement layer. The puddle displacement layer is capable of modifying the solid displacement layer.

As described herein, "puddle" is defined by an area of the wexel map where the Puddle value has been raised up by the presence of particles. The sampling process is represented in Figures 19a-19c. A section of a wexel map is shown having seven adjacent wexels. The current Displacement values are represented by un-shaded rectangular bars **1910** of a given height (i.e., a given displacement for each wexel). In Figure 19a, the particles **1920** are shown as round un-shaded dots colliding with the current Displacement levels and are piled up. In Figure 19b, the "highest" particle heights **1930** are sampled at each wexel location. In Figure 19c, the shaded rectangles **1940** show how much Puddle has been added on top of the Displacement as a result of the particles. The weld puddle height is not instantly set to the sampled values since Puddle is added at a particular liquification rate based on Heat. Although not shown in Figures 19a-19c, it is possible to visualize the solidification process as the Puddle (shaded rectangles) gradually shrink and the Displacement (un-shaded rectangles) gradually grow from below to exactly take the place of the Puddle. In this manner, real-time molten metal fluidity characteristics are accurately simulated. As a user practices a particular welding process, the user is able to observe the molten metal fluidity characteristics and the heat dissipation characteristics of the weld puddle in real-time in virtual reality space and use this information to adjust or maintain his welding technique.

The number of wexels representing the surface of a welding coupon is fixed. Furthermore, the puddle particles that are generated by the simulation to model fluidity are temporary, as described herein. Therefore, once an initial puddle is generated in virtual reality space during a simulated welding process using the simulator **10**, the number of wexels plus puddle particles tends to remain relatively constant. This is because the number of wexels that are being processed is fixed and the number of puddle particles that exist and are being processed during the welding process tend to remain relatively constant because puddle particles are being created and "destroyed" at a similar rate (i.e., the puddle particles are temporary). Therefore, the processing load of the logic processor-based subsystem **110** remains relatively constant during a simulated welding session.

In accordance with an alternate embodiment of the present invention, puddle particles may be generated within or below the surface of the welding coupon. In such an embodiment, displacement may be modeled as being positive or negative with respect to the original surface displacement of a virgin (i.e., un-welded) coupon. In this manner, puddle particles may not only build up on the surface of a welding coupon, but may also penetrate the welding coupon. However, the number of wexels is still fixed and the puddle particles being created and destroyed is still relatively constant.

In accordance with alternate embodiments of the present invention, instead of modeling particles, a wexel displacement map may be provided having more channels to model the fluidity of the puddle. Or, instead of modeling particles, a dense voxel map may be modeled. Or, instead of a wexel map, only particles may be modeled which are sampled and never go away. Such alternative embodiments may not provide a relatively constant processing load for the system, however.

Furthermore, in accordance with an embodiment of the present invention, blowthrough or a keyhole is simulated by taking material away. For example, if a user keeps an arc in the same location for too long, in the real world, the material would burn away causing a hole. Such real-world burnthrough is simulated in the simulator **10** by wexel decimation techniques. If the amount of heat absorbed by a wexel is determined to be too high by the simulator **10**, that wexel may be flagged or designated as being burned away and rendered as such (e.g., rendered as a hole). Subsequently, however, wexel re-constitution may occur for certain welding process (e.g., pipe welding) where material is added back after being initially burned away. In general, the simulator **10** simulates wexel decimation (taking material away) and wexel reconstitution (i.e., adding material back).

Furthermore, removing material in root-pass welding is properly simulated in the simulator 10. For example, in the real world, grinding of the root pass may be performed prior to subsequent welding passes. Similarly, simulator 10 may simulate a grinding pass that removes material from the virtual weld joint. It will be appreciated that the material removed is modeled as a negative displacement on the wexel map. That is to say that the grinding pass removes material that is modeled by the simulator 10 resulting in an altered bead contour. Simulation of the grinding pass may be automatic, which is to say that the simulator 10 removes a predetermined thickness of material, which may be respective to the surface of the root pass weld bead. In an alternate embodiment, an actual grinding tool, or grinder, may be simulated that turns on and off by activation of the mock welding tool 160 or another input device. It is noted that the grinding tool may be simulated to resemble a real world grinder. In this embodiment, the user maneuvers the grinding tool along the root pass to remove material responsive to the movement thereof. It will be understood that the user may be allowed to remove too much material. In a manner similar to that described above, holes or keyholes, or other defects (described above) may result if the user "grinds away" to much material. Still, hard limits or stops may be implemented, i.e. programmed, to prevent the user from removing to much material or indicate when too much material is being removed.

In addition to the non-visible "puddle" particles described herein, the simulator **10** also uses three other types of visible particles to represent Arc, Flame, and Spark effects, in accordance with an embodiment of the present invention. These types of particles do not interact with other particles of any type but interact only with the displacement map. While these particles do collide with the simulated weld surface, they do not interact with each other. Only Puddle particles interact with each other, in accordance with an embodiment of the present invention. The physics of the Spark particles is setup such that the Spark particles bounce around and are rendered as glowing dots in virtual reality space.

The physics of the Arc particles is setup such that the Arc particles hit the surface of the simulated coupon or weld bead and stay for a while. The Arc particles are rendered as larger dim bluish-white spots in virtual reality space. It takes many such spots superimposed to form any sort of visual image. The end result is a white glowing nimbus with blue edges.

The physics of the Flame particles is modeled to slowly raise upward. The Flame particles are rendered as medium sized dim red-yellow spots. It takes many such spots superimposed to form any sort of visual image. The end result is blobs of orange-red flames with red edges raising upward and fading out. Other types of non-puddle particles may be implemented in the simulator **10**, in accordance with other embodiments of the present invention. For example, smoke particles may be modeled and simulated in a similar manner to flame particles.

The final steps in the simulated visualization are handled by the vertex and pixel shaders provided by the shaders **117** of the GPUs **115**. The vertex and pixel shaders apply Puddle and Displacement, as well as surface colors and reflectivity altered due to heat, etc. The Extra (E) channel of the PHED wexel format, as discussed earlier herein, contains all of the extra information used per wexel. In accordance with an embodiment of the present invention, the extra information includes a non virgin bit (true=bead, false=virgin steel), a slag bit, an undercut value (amount of undercut at this wexel where zero equals no undercut), a porosity value (amount of porosity at this wexel where zero equals no porosity), and a bead wake value which encodes the time at which the bead solidifies. There are a set of image maps associated with different coupon visuals including virgin steel, slag, bead, and porosity. These image maps are used both for bump mapping and texture mapping. The amount of blending of these image maps is controlled by the various flags and values described herein.

A bead wake effect is achieved using a 1D image map and a per wexel bead wake value that encodes the time at which a given bit of bead is solidified. Once a hot puddle wexel location is no longer hot enough to be called "puddle", a time is saved at that location and is called "bead wake". The end result is that the shader code is able to use the 1D texture map to draw the "ripples" that give a bead its unique appearance which portrays the direction in which the bead was laid down. In accordance with an alternative embodiment of the present invention, the simulator **10** is capable of simulating, in virtual reality space, and displaying a weld bead having a real-time weld bead wake characteristic resulting from a real-time fluidity-to-solidification transition of the simulated weld puddle, as the simulated weld puddle is moved along a weld trajectory.

In accordance with an alternative embodiment of the present invention, the simulator **10** is capable of teaching a user how to troubleshoot a welding machine. For example, a troubleshooting mode of the system may train a user to make sure he sets up the system correctly (e.g., correct gas flow rate, correct power cord connected, etc.) In accordance with another alternate embodiment of the present invention, the simulator **10** is capable of recording and playing back a welding session (or at least a portion of a welding session, for example, N frames). A track ball may be provided to scroll through frames of video, allowing a user or instructor to critique a welding session. Playback may be provided at selectable speeds as well (e.g., full speed, half speed, quarter speed). In accordance with an embodiment of the present invention, a split-screen playback may be provided, allowing two welding sessions to be viewed side-by-side, for example, on the observer display device **150**. For example, a "good" welding session may be viewed next to a "poor" welding session for comparison purposes.

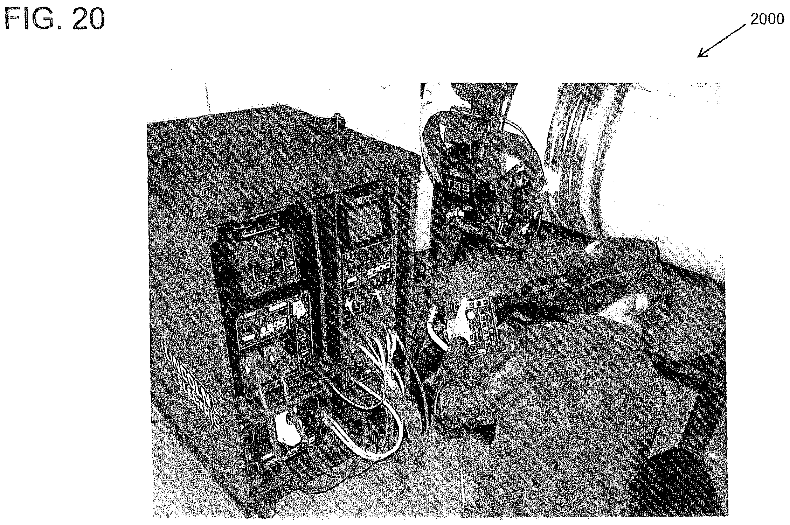

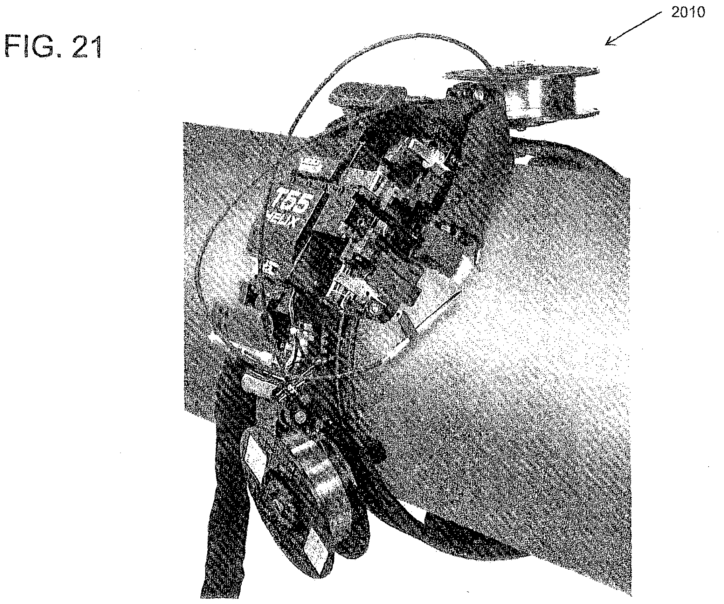

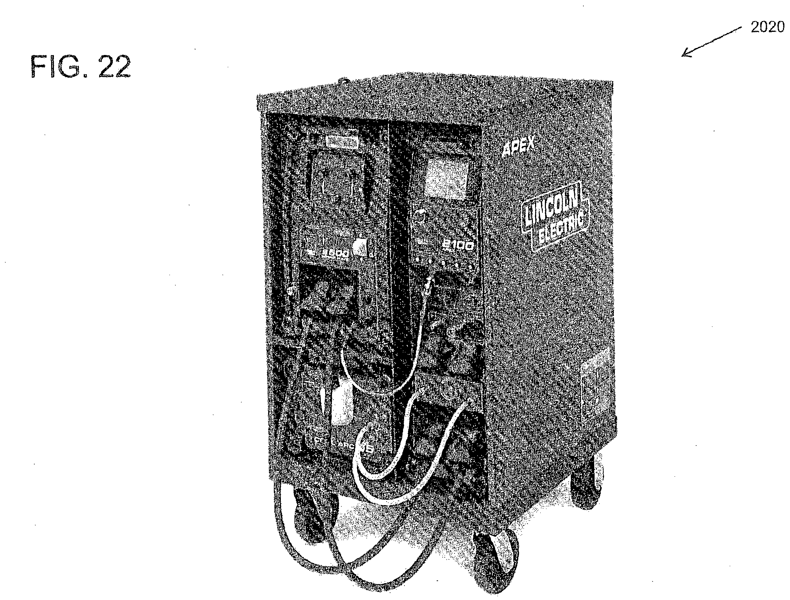

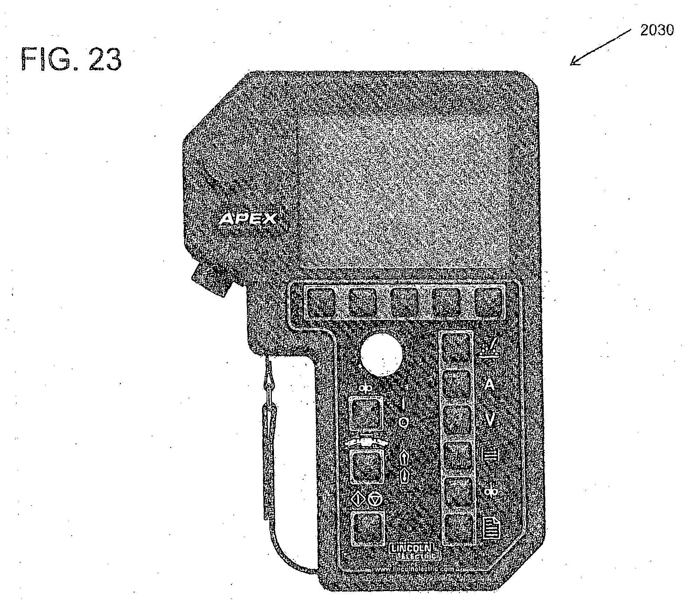

Automated welding is also an aspect of the present invention. One illustrative example of automated welding is orbital welding, which is often used for the joining of tubes or pipes of various types of materials. For example, a TIG (GTAW) welding torch may be used to orbit around the pipes to be welded together by an automated mechanical system. Figure 20 illustrates an example embodiment of an orbital welding system as used in an orbital welding environment. An orbital welding system includes a welding tractor that travels around the pipes or tubes, a welding power source and controller, and a pendant providing operator control. Figure 21 shows the welding tractor 2010 of the orbital welding system of Figure 20, as operably connected to two pipes to be welded. Figure 22 shows a power source and controller 2020 of the orbital welding system of Figure 20, and Figure 23 shows a pendant 2030 of the orbital welding system of Figure 20.

While the above discussion has focused on the virtual reality simulation of processes, which include orbital welding, embodiments of the invention are not limited to that aspect and includes teaching and feedback aspects of the actual setup and performance characteristics associated with welds made in accordance with a user-defined setup. As discussed above, GTAW/GMAW welding requires training to ensure that the operator understands the controls which are available for the practice of this process. There is a misconception that automation associated with orbital welding systems eliminates the need for training, since the machine is doing the welding. Automated orbital welding requires training to ensure the operator understands welding, and all of the unique setup and implementation skills for controlling TIG beads. This includes error correction, larger diameter pipe welding, the utilization of remote cameras, and proper error assessment and correction. Training programs offer inconsistent or insufficient coverage of teaching a good weld situation, a bad weld situation and the mechanisms to perform, react to or correct each. Instructors for this type of niche solution are hard to find with sufficient background and/or industry knowledge and experience. Only through quality training taught by certified instructors can operators of orbital welding equipment gain the complex skills needed to meet the strict acceptance criteria in today's welding environment. Additionally, on large circumference projects with long weld joints, the difficulty of maintaining attention and focus represents a significant problem.

In the GTAW process, an electric arc is maintained between the non-consumable tungsten electrode and the workpiece. The electrode supports the heat of the arc and the metal of the workpiece melts and forms the weld puddle. The molten metal of the workpiece and the electrode must be protected against oxygen in the atmosphere, thereby typically employing an inert gas such as argon as the shielding gas. If the addition of a filler metal is used, the filler wire can be fed to the weld puddle, where it melts due to the energy delivered by the electric arc. In accordance with one embodiment of the invention, a virtual reality welding system is provided that incorporates technology related to viewing a GTAW/GMAW automated welding operation, using a pendant (actual or virtual) or remote control as it relates to automated welding, identifying welding discontinuities based upon chosen welding parameter combinations, and correcting operator selections and combinations of parameters through the use of user screens to understand the interaction of various parameters and their impact on weld quality with proper terminology and visual elements related to automated welding.

By implementing orbital GTAW training in a virtual environment, a number of issues may be addressed. For example, industry and experience in orbital welding is based on the knowledge of the development company and therefore is consistent and updated to the latest technology and standards available, which is easily done by software upgrade in a virtual environment. The instructor becomes a facilitator to the program and does not need to be an orbital GTAW expert. Additional training aids, such as path following cues or visual overlays, improve transfer of training in a virtual environment. Orbital GTAW equipment, that can become outdated, does not need to be purchased. The virtual reality system can be used in a one-on-one training environment or a classroom type of setting.

The use of a virtual framework allows multiple pendants to be simulated with one training device. In implementing orbital GTAW in virtual reality, a pendant can be made as a physical device or as a virtual pendant. With the physical device, the student is able to interact with the controls and get the "feel" for the control. With a virtual pendant, where the controls are available and interacted with on a touch screen, the user can easily choose a variety of pendants for control, whether they are customized or company dependant. A virtual pendant also allows for different types of controls or levels to be enabled for use by the student depending on learning levels or controls available based on their industry level (mirroring field work experience). Unlike traditional training, randomized faults (e.g. wire nesting) can be implemented that provide the user a more detailed and complete experience without damage to the equipment or time-consuming setup.

Part of the learning interaction is the understanding of proper welding parameters based on the joint, preparation, material type, etc. In accordance with an embodiment, in virtual reality, theory enabled screens can be enabled to prompt a user with knowledge as to the proper choice to make. Additional screens or tables can be enabled to prompt a user with knowledge of what to input, but can also be enabled when a wrong choice is selected to highlight what was chosen and why it was incorrect, with the proper selections identified. This type of intelligent agent can ensure that the student does not perform incorrectly and become frustrated by the end result, positive reinforcement and learning being the key. An embodiment of the invention will also allow for the system or instructor to quiz user's knowledge and adapt the training curriculum and testing to the individual user's blind spots. An embodiment of the present invention employs artificial intelligence (Al) and a learning management system (LMS) to help with instruction in needed areas, reinforce knowledge, and provide learning assistance.

Setup parameters may include, but are not limited to: inert gas (e.g., Argon, Helium); arc ignition; welding current (e.g., pulsed vs. unpulsed); downslope functionality to avoid cratering at the end of the weld; torch rotation travel speed; wire feed characteristics (e.g., pulsed waveforms); wire diameter selection; arc voltage; distance between electrode and workpiece; welding oscillation control; remote control; cooling characteristics of the generally integrated closed-loop water cooling circuit; and weld cycle programming (often with four axes), etc.

Inspection and review of the weld is another aspect to the learning process. The student can view the weld and identify what is correct or wrong and, based on these choices, receive a score to identify whether they were right and further receive input on what is right or wrong based on industry standards. This can be enhanced further to identify how to correct these situations. For instance, with the correct amperage and speed (identified), the weld may be a good weld based on a particular industry standard.

As described above, a physical teach pendant or a hand-held control device for input selection in virtual reality welding may be provided. Alternatively, a virtual teach pendant device for control input selection for virtual reality welding may be provided. Interactions with the handheld or virtual device that are student learning level or industry role dependant that can be enabled on the device. Restricting controls or interactions based on the user may be provided to enhance learning objectives or reinforce industry role interactions, in accordance with an embodiment.

Teaching interaction or reactions based on visual, audible, or physical changes may be provided to ensure the user knows the proper set-up or error recovery. Also, teaching interaction or reactions based on visual, audible, or physical changes may be provided to ensure the user knows the proper changes in controls needed based on environmental or weld specific changes being made. Virtual calculators or tables may be enabled that allow input and provide an output based on values entered. Intelligent agent enabled results based on incorrect set-up parameters or choices may be provided to reinforce correct industry standards. Furthermore, intelligent agent enabled input to identify what the proper controls input should have been may be provided, based on the current visual, audio or physical indicators. In accordance with an embodiment, the simulation of camera based systems may be provided along with the creation of path following and path determinative systems based upon a fuzzy logic controller based system. For example, multiple renderings may be provided by simulating two camera views such that the camera views may be moved during the simulation. In accordance with an embodiment, an alarm may sound when the desired path is deviated from, based on the fuzzy logic, for example. Visualization of a simulated TIG weld puddle may be provided via pixel sizes that are small enough to provided proper visualization of the TIG weld puddle. Simulation of the magnification of the simulated TIG weld puddle may also be provided, for better visualization by the user.

Multiple levels of experience for the user that adapt to the skill level, learning pace and learning style of the user (LMS compatible) may be provided. Artificial intelligence (Al) based fault induction may also be provided in order to test the user's ability to detect, correct and recover from problems. The simulation of unsafe conditions, machine setup, and materials defects may be provided. Also, a multi-language capable system may be provided, allowing for harmonization of training for a global marketplace, in accordance with an embodiment. An embodiment of the present invention may provide a virtual simulation environment allowing two or more users (multi-man) to create a virtual weld, such as in certain orbital welding scenarios.

### ENHANCED SIMULATED TIG WELDING

One embodiment provides a simulator for facilitating virtual welding activity. The simulator includes a logic processor based subsystem operable to execute coded instructions for generating an interactive welding environment in virtual reality space that emulates welding activity on a virtual welding coupon, wherein the interactive welding environment simulates a virtual weld puddle on the virtual welding coupon, having dynamic real time molten metal fluidity and heat dissipation characteristics, responsive to performing the virtual welding activity in real time. The terms "logic processor based subsystem" and "programmable processor-based subsystem" may be used interchangeably herein. The term "virtual" as used herein may refer to elements that are simulated in a virtual reality environment by the computer instructions of the simulator. Some virtual elements may be displayed to a user via displaying means as described herein, for example.

The simulator further includes a foot pedal device in operative communication with the logic processor based subsystem and configured to affect at least one characteristic of the virtual weld puddle in real time, responsive to user control of the foot pedal device. The simulator also includes displaying means operatively connected to the logic processor based subsystem and configured to visually depict the interactive welding environment, including the virtual weld puddle on the virtual welding coupon, in real time. The foot pedal device may be in operative communication with the logic processor based subsystem by one of a wired means or a wireless means. The at least one characteristic of the virtual weld puddle may be one or more of a width of the virtual weld puddle and a height of the virtual weld puddle.

The foot pedal device may be a mock foot pedal device simulating a real-world foot pedal device, or the foot pedal device may be a real-world foot pedal device capable of being used with a real-world welding system as well as with the simulator. The logic processor based subsystem may be configured to simulate changing of a welding parameter such as one of a simulated welding output current level or a simulated wire feed speed in response to the user control of the foot pedal device, thereby affecting the at least one characteristic of the virtual weld puddle. The simulator may include a mock welding coupon representative of the virtual welding coupon in virtual reality space. The term "mock" as used herein may refer to elements that are simulated in the real-world, not in virtual reality space, to be representative of real-world elements. For example, a mock welding tool may be made of plastic and have one or more sensors and may be configured to approximate the look and feel of a real-world welding tool to a user as the user handles and manipulates the mock welding tool.

The simulator may also include a mock welding tool, representative of a virtual welding tool in virtual reality space, for performing virtual welding activity on the virtual welding coupon in real time as a user manipulates the mock welding tool with respect to the mock welding coupon. The simulator may include a spatial tracking subsystem operatively connected to the logic processor based subsystem. The simulator may further include one or more sensors configured to facilitate tracking movement of the mock welding tool in real time by communicating data about the temporally changing position of the mock welding tool to the spatial tracking subsystem. The mock welding tool and the corresponding virtual welding tool may be simulated as including one of a non-consumable tungsten electrode, a consumable stick electrode, or a consumable wire electrode, for example. The foot pedal device may be configured to provide haptic feedback to the user indicating that a present pedal position of the foot pedal device is outside of a determined range for proper welding.

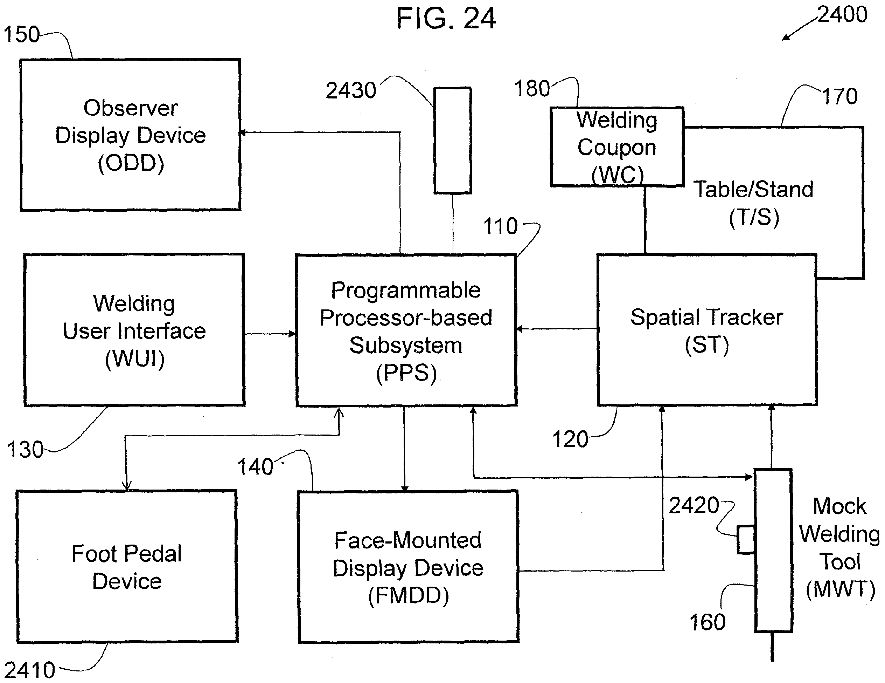

Figure 24 illustrates a schematic block diagram of an exemplary representation of a second embodiment of a simulator 2400. The simulator 2400 is similar to the simulator 100 of Figure 4, except that the simulator 2400 includes a foot pedal device 2410 and includes a mock welding tool 160 having a selectable gas flow selector 2420. The foot pedal device 2410 is operatively connected to the PPS 110, either via wired means (e.g., an electronic cable) or wireless means (e.g., a Bluetooth™ connection). In accordance with an embodiment, the foot pedal device 2410 may be used by an operator (user) to adjust, for example, a simulated welding output current or a simulated wire feed speed. For example, during a simulated TIG welding session, the operator may press on the foot pedal device 2410 to increase the size of a virtual weld puddle by effectively telling the simulator to increase the effective welding output current level. Similarly, the operator may press on the foot pedal device 2410 to decrease the size of a virtual weld puddle by effectively telling the simulator to decrease the effective welding output current level. One or more of the length, width, and height of the virtual weld puddle may be affected in real time. In accordance with one embodiment, the foot pedal device may be adjusted in a continuous manner over a determined range by the operator. In accordance with another embodiment, the foot pedal device may be adjusted in a stepwise manner over a determined range.

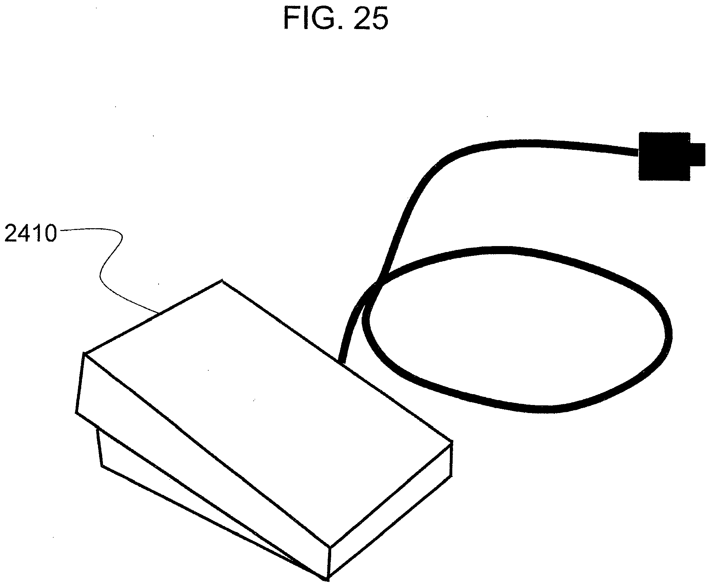

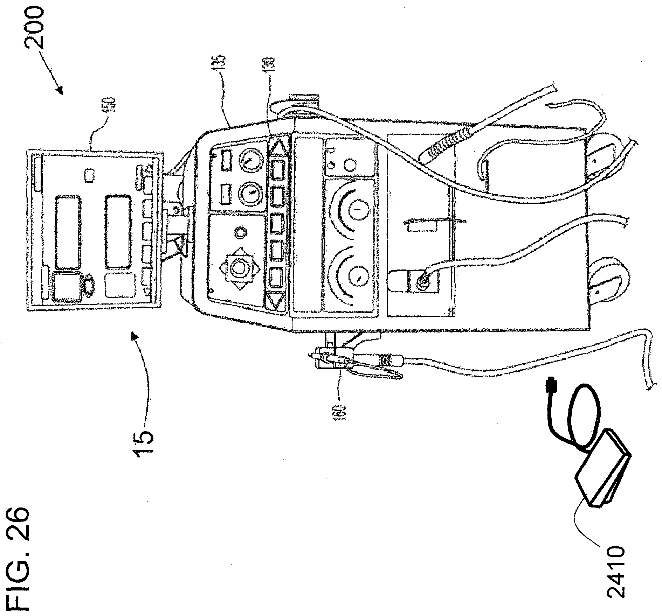

Figure 25 illustrates an exemplary embodiment of a foot pedal device 2410 used in the simulator 2400 of Figure 24. Figure 26 illustrates an exemplary embodiment of the simulator 2400 of Figure 24 showing the foot pedal device 2410 of Figure 25. The foot pedal device 2410 may be a mock foot pedal device, configured specifically for operation with the simulator to simulate a "real" foot pedal device. Alternatively, the foot pedal device 2410 may be a "real" foot pedal device configured for use with a "real" welding system. However, in accordance with an embodiment, the simulator 2400 may be configured to be compatible with the "real" foot pedal device. For example, a "real" foot pedal device may be a wireless device that wirelessly outputs data that is indicative of a pedal position of the foot pedal device. The logic processor based subsystem (PPS 110) may be configured to wirelessly receive the data output from the foot pedal device just as a real welding system, for which the foot pedal device was originally intended, is configured.

During the performance of a virtual welding activity by an operator of the simulator, the mock welding coupon 180 is represented as a virtual welding coupon in virtual reality space. The mock welding tool 160 is represented as a virtual welding tool in virtual reality space and is used for performing the virtual welding activity on the virtual welding coupon in real time as the operator manipulates the mock welding tool with respect to the mock welding coupon. In accordance with an embodiment, one or more sensors 122 are configured to facilitate tracking movement of the mock welding tool in real time by communicating data about the temporally changing position of the mock welding tool to the spatial tracking subsystem 120. The spatial tracker (ST) 120 may be part of the logic processor based subsystem 110 and performs the tracking functions, in accordance with an embodiment. The terms "spatial tracker" and "spatial tracking subsystem" may be used interchangeably herein. Alternatively, the spatial tracking subsystem 120 is operatively connected to the logic processor based subsystem 110, performs the tracking functions, and provides tracking information to the logic process based subsystem 110. The mock welding tool and the corresponding virtual welding tool may be simulated as including one of a non-consumable tungsten electrode, a consumable stick electrode, or a consumable wire electrode, for example.

In accordance with an embodiment, the foot pedal device 2410 is configured to provide haptic feedback to the operator, indicating that a present pedal position of the foot pedal device is outside of a determined range for proper welding. For example, the foot pedal device 2410 may vibrate (where the vibration is the haptic feedback) when the present pedal position of the foot pedal device is outside of a determined range for proper welding. Alternativley, the foot pedal device 2410 may vibrate (where the vibration is the haptic feedback) when the present pedal position of the foot pedal device is within a determined range for proper welding. Other feedback indicators may be provided as well. For example, a displayed message may be provided to the operator or some other visible (e.g., flashing light) or audible indicator (e.g., beeping sound) may be provided, indicating an in-range or out-of-range condition with respect to the present pedal position of the foot pedal device.

One embodiment provides a simulator for facilitating virtual welding activity. The simulator includes a mock welding coupon represented in virtual reality space by a virtual welding coupon, and a mock welding tool represented in virtual reality space by a virtual welding tool. The simulator further includes a logic processor based subsystem operable to execute coded instructions for generating an interactive welding environment in virtual reality space that emulates welding activity on the virtual welding coupon by the virtual welding tool, wherein the interactive welding environment simulates a virtual weld puddle on the virtual welding coupon, having dynamic real time molten metal fluidity and heat dissipation characteristics, responsive to performing the virtual welding activity in real time.

The simulator includes a spatial tracking subsystem operatively connected to the logic processor based subsystem. The simulator also includes one or more first sensors configured to facilitate tracking movement of at least a tip of the mock welding tool in real time by communicating data about the temporally changing position of the mock welding tool to the spatial tracking subsystem. The logic processor based subsystem is configured to accept tracking information from the spatial tracking subsystem and determine when the tip of the virtual welding tool, corresponding to the tip of the mock welding tool, intersects a surface of the virtual weld puddle in virtual reality space during the virtual welding activity, and wherein the logic processor based subsystem is further configured to generate an indication, to be provided to a user, that the virtual welding tool has become contaminated due to the intersecting.

The simulator may further include a mock filler wire or mock filler rod represented in virtual reality space by a virtual filler wire or a virtual filler rod. The terms "filler wire" and "filler rod" may be used interchangeably herein. The simulator may also include one or more second sensors configured to facilitate tracking movement of at least a tip of the mock filler wire in real time by communicating data about the temporally changing position of the mock filler wire to the logic spatial tracking subsystem. The logic processor based subsystem may be configured to accept tracking information from the spatial tracking subsystem and determine when the tip of the virtual filler wire, corresponding to the tip of the mock filler wire, touches the virtual welding tool in virtual reality space during the virtual welding activity. The logic process based subsystem may further be configured to generate an indication, to be provided to a user, that the virtual welding tool has become contaminated due to the touching.

The logic processor based subsystem may be further configured to determine when the tip of the virtual filler wire penetrates the virtual weld puddle, and modify at least a height of the virtual weld puddle due to the penetration. The simulator may also include a foot pedal device operatively connected to the logic processor based subsystem and configured to change at least one characteristic of the virtual weld puddle in real time, responsive to user control of the foot pedal device. The at least one characteristic of the virtual weld puddle may be one or more of a width of the virtual weld puddle and a height of the virtual weld puddle.

The simulator may further include displaying means operatively connected to the logic process based subsystem for visually depicting the interactive welding environment, wherein the displaying means depicts the virtual weld puddle on the virtual welding coupon in real time. The logic processor based subsystem may be configured to convert the virtual weld puddle to a virtual weld bead during the virtual welding activity, wherein the indication that the virtual welding tool has become contaminated due to the intersecting corresponds to depicting the virtual weld bead on the displaying means as having one or more defects.

The mock welding tool and the corresponding virtual welding tool may be simulated as including a non-consumable tungsten electrode. A stick out position of the mock welding tool may be adjustable by a user. The simulator may also include a user selectable gas flow selector mounted on the mock welding tool and configured to communicate to the logic processor based subsystem that a simulated gas flow out of the virtual welding tool is off when in a first position, and that the simulated gas flow is on when in a second position. The simulator may further include a plurality of mock gas flow cups each configured to be attached to and detached from the mock welding tool, wherein each mock gas flow cup of the plurality of mock gas flow cups is configured to simulate a unique directing of gas flow out of the mock welding tool.

The logic processor based subsystem may be configured to simulate the establishment of an arc between the tip of the virtual welding tool and the virtual welding coupon when a user touches the tip of the mock welding tool to the mock welding coupon and lifts the tip of the mock welding tool off of the mock welding coupon in a determined manner. The logic processor based subsystem may be configured to simulate the establishment of an arc between the tip of the virtual welding tool and the virtual welding coupon when a user drags the tip of the mock welding tool across a surface of the mock welding coupon in a determined manner. The logic processor based subsystem may be configured to simulate the establishment of an arc between the tip of the virtual welding tool and the virtual welding coupon when a user moves the tip of the mock welding tool toward the mock welding coupon in a determined manner, without touching the mock welding coupon with the tip of the mock welding tool.

In the real world, when a non-consumable tungsten electrode becomes contaminated, the user has to cease welding and either replace the contaminated electrode or clean and reprepare the contaminated electrode. This takes time and results in an inefficient welding session. Therefore, when training a user to perform a GTAW welding process using the simulator herein, the user is made aware when he has contaminated the electrode. A user may contaminate an electrode by lowering the tip or end of the electrode into the weld puddle, by touching the filler wire to the electrode, or by pushing up the weld puddle with the filler wire, causing the weld puddle to rise up and touch the tip or end of the electrode. Teaching a user not to contaminate the electrode is an important aspect of GTAW welding.

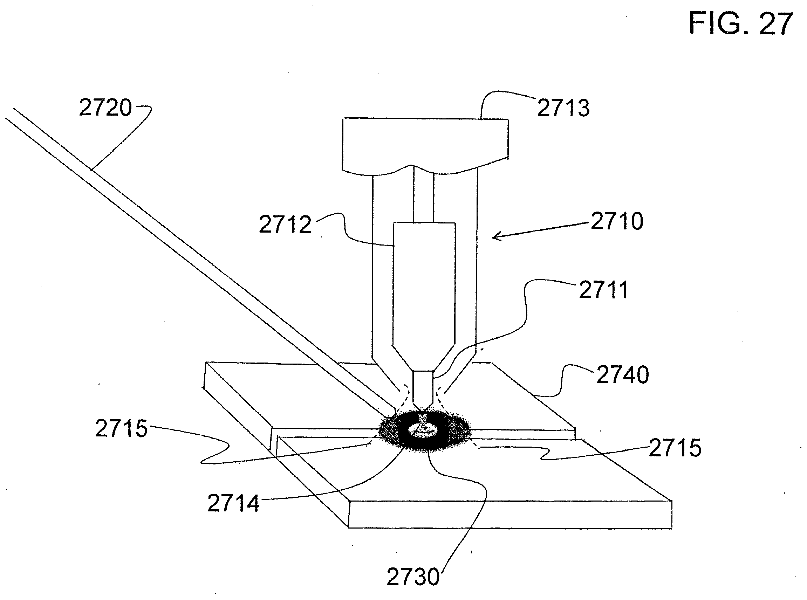

Figure 27 illustrates an exemplary embodiment of a virtual welding activity in virtual reality space. Such a virtual welding activity may be displayed on the display device 150, for example. The welding activity shown in Figure 27 is a simulated GTAW welding activity. A virtual welding tool 2710 and a virtual filler wire 2720 are shown creating a virtual weld puddle 2730 on a virtual welding coupon 2740 during a simulated GTAW welding process. The virtual welding tool 2710 simulates a non-consumable tungsten electrode 2711, a contact tube 2712, and a GTAW head 2713 in virtual reality space. The welding activity shown in Figure 27 also illustrates a virtual electrical arc 2714 and a virtual shielding gas 2715 in virtual reality space.

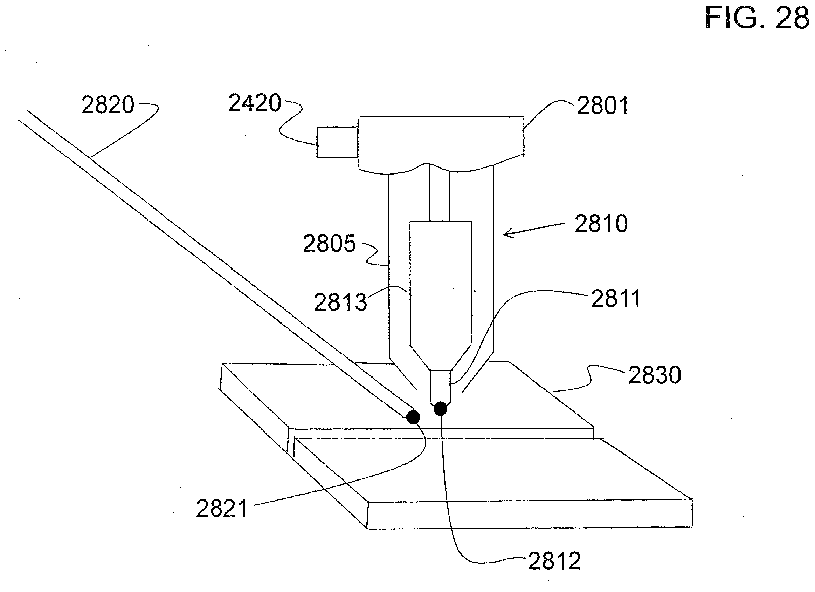

Figure 28 illustrates an exemplary embodiment of a simulated welding activity, representative of the virtual welding activity of Figure 27, using a mock welding tool 2810 and a mock filler wire 2820 that may be manipulated by a user during the simulated welding activity with respect to a mock welding coupon 2830. The mock welding tool 2810, the mock filler wire 2820, and the mock welding coupon 2830 are respectively represented in virtual reality space by the virtual welding tool 2710, the virtual filler wire 2720, and the virtual welding coupon 2740. The representation of the welding activity in virtual reality space as shown in Figure 27 is responsive to the users actions with respect to the mock welding tool 2810, the mock filler wire 2820, and the mock welding coupon 2830.

The mock welding tool 2810 includes a mock non-consumable tungsten electrode 2811. In accordance with an embodiment, the tip of the mock non-consumable tungsten electrode 2811 has one or more sensors 2812 to facilitate tracking of the position of the tip of the mock electrode 2811 by the spatial tracking subsystem 120. Similarly, the tip of the mock filler wire 2820 has one or more sensors 2821 to facilitate tracking of the position of the tip of the mock filler wire 2820 by the spatial tracking subsystem 120. In accordance with an embodiment, the sensors 2812 and 2821 may be similar to the sensors 122 and may have multiple induction coils aligned in crossing spatial directions when the spatial tracking subsystem 120 is a magnetic tracking subsystem as described herein, allowing the respective tips of the mock electrode 2811 and the mock filler wire 2820 to be tracked in three-dimensional space as a user moves the mock welding tool 2810 and the mock filler wire 2820 during a simulated welding activity. Other types of sensors may be used in other embodiments using other methods of tracking (e.g., infrared-based tracking, camera-based tracking, accelerometer-based tracking).

Again, the mock welding tool 2810 is represented in virtual reality space as the virtual welding tool 2710 and the mock welding coupon 2830 is represented in virtual reality space as the virtual welding coupon 2740. The logic based processor subsystem 110 is operable to execute coded instructions to generate the interactive welding environment in virtual reality space which emulates welding activity on the virtual welding coupon 2740 by the virtual welding tool 2710. Use of the mock filler wire 2820 is optional and, therefore, the mock filler wire 2820 may or may not be used during a simulated welding activity.

The interactive welding environment simulates the virtual weld puddle 2730 on the virtual welding coupon 2740 in virtual reality space. The virtual weld puddle 2730 is simulated to have dynamic, real time molten metal fluidity and heat dissipation characteristics, responsive to the user performing the simulated welding activity in real time. When simulating the virtual weld puddle, the effects of the virtual arc 2714, the virtual shielding gas 2715, and the virtual filler wire 2720 are all taken into consideration. In GTAW (TIG) welding, it is important that the non-consumable tungsten electrode not touch the weld puddle or the filler wire. Otherwise, the non-consumable tungsten electrode can become contaminated which can adversely affect the resultant weld bead. For example, a contaminated electrode can cause the resultant weld bead to contain various types of defects which are well known in the art.

In accordance with an embodiment, the logic processor based subsystem 110 accepts tracking information from the spatial tracking subsystem 120 and determines when the tip of the virtual electrode 2711 of the virtual welding tool 2710, corresponding to the tip of the mock electrode 2811 of the mock welding tool 2810, intersects a surface of the virtual weld puddle 2730 in virtual reality space during the virtual welding activity, thus virtually contaminating the electrode. The electrode may intersect the surface of the weld puddle due to the user lowering the tip or end of the electrode into the weld puddle, or by pushing up the weld puddle with the filler wire, causing the weld puddle to rise up and touch the tip or end of the electrode. In accordance with an embodiment, the logic processor based subsystem 110 determines when the tip of the virtual filler wire 2720 penetrates the virtual weld puddle 2730 and modifies, for example, a height of the virtual weld puddle 2730 due to the penetration. Also, in accordance with an embodiment, the foot pedal device 2410 may be used, as previously described herein, to affect the virtual weld puddle 2730 in real time. For example, the height or the width of the virtual weld puddle may be changed by operation of the foot pedal device. Improper operation of the foot pedal may also result in contamination of the electrode. Similarly, the logic processor based subsystem 110 accepts tracking information from the spatial tracking subsystem 120 and determines when the tip of the virtual filler wire 2720, corresponding to the tip of the mock filler wire 2820, virtually touches the virtual electrode 2711 in virtual reality space during the virtual welding activity, thus virtually contaminating the electrode.

In accordance with an embodiment, the logic processor based subsystem 110 takes into account the contamination of the electrode and how the contaminated electrode affects the weld puddle and, therefore, the resultant weld bead. Also, the logic processor based subsystem 110 may be configured to generate an indication, to be provided to the user, that the electrode of the welding tool has become contaminated, in a virtual sense. The indication may be in the form of a visible indicator (e.g., a flashing light) and/or an audible indicator (e.g., a beeping sound). Alternatively, or in addition, a displayed message may be provided to the operator indicating that the electrode has become contaminated. In accordance with an embodiment, the user may not be able to continue with the simulated welding activity until the user indicates to the simulator that the tungsten electrode has been cleaned or replaced. This may be accomplished by an input sequence entered into the user interface of the welding simulator by the user, for example. Inputting the user input sequence may be just inconvenient enough to motivate the user to avoid contaminating the electrode.

In accordance with an embodiment, a stick-out position of the mock non-consumable tungsten electrode 2811 is adjustable. Therefore, a user may adjust the amount of stick-out of the mock electrode 2811 on the mock welding tool 2810, for example, to help prevent virtual contamination of the corresponding virtual electrode 2711 by the user. Adjustment of the stick-out position may be accomplished in any of various ways including, for example, an adjustable connection to the fixed mock contact tube 2813. Such adjustment may be made by screwing the mock electrode 2811 a desired distance into or out of the mock contact tube 2813, for example. Other methods of adjustment are possible as well, in accordance with various other embodiments.

During a simulated welding activity, the virtual welding tool 2710 provides a simulated shielding gas 2715 out of the end of the virtual welding tool 2710 to simulate, for example, the shielding gas provided in a GTAW welding process. Referring to Figure 24, the mock welding tool 160 (or 2810 in Figure 28) may include a selectable mock gas flow selector 2420 mounted on the mock welding tool. The mock gas flow selector 2420 is configured to communicate to the logic processor based subsystem 110 (via wired or wireless means) that a simulated gas flow out of the virtual welding tool is "off' when in a first position, and that the simulated gas flow is "on" when in a second position. The mock gas flow selector 2420 may be a rotatable knob or a switch, for example, in accordance with various embodiments. For a GTAW welding process, it is important that the user turn the gas flow "on" to provide the shielding gas during the welding process. Failure to turn the gas flow "on" in the simulation may result in the weld bead being simulated as having one or more types of defects.

In accordance with an embodiment, the simulator may provide a plurality of mock gas flow cups each configured to be attached to and detached from the mock welding tool. Each mock gas flow cup may be configured to simulate a unique directing of gas flow out of the mock welding tool. An example of a detachable mock gas flow cup 2805 is shown in Figure 28. In accordance with an embodiment, the mock gas flow cup 2805 snaps into a mock GTAW head 2801 of the mock welding tool 2810. Other means of attaching a mock gas flow cup to a mock welding tool are possible as well, in accordance with various other embodiments. The shape of the output end of the mock gas flow cup 2805 near the tip of the mock electrode 2811 mimics the shape of a real gas flow cup which determines the direction of real gas flow out of a welding tool. Each mock gas flow cup of the plurality of mock gas flow cups may have a differently shaped output end, representative of different real gas flow cups providing different directional gas flows. In the simulated welding environment, a user may select a mock gas flow cup to attach to the mock welding tool.

In accordance with an embodiment, when a mock gas flow cup 2805 is attached to the mock welding tool 2810 by the user, the user may enter, into the simulator via the user interface 130, an identifier of the mock gas flow cup. As such, the logic processor based subsystem 110 takes into account the particular attached mock gas flow cup and simulates directional gas flow out of the virtual welding tool 2810 in virtual reality space based on the identified mock gas flow cup. As a result, the simulation of the virtual weld puddle and the resulting virtual weld bead may be affected by the attached mock gas flow cup.

In accordance with another embodiment, when a mock gas flow cup is attached to the mock welding tool, identifying data may be automatically provided to the logic processor based subsystem 110 by wired or wireless means. For example, the mock gas flow cup may be encoded (e.g., via bar coding or radio frequency identification) with an identifying code that can be read by the simulator. In such an embodiment, a scanning or reading device 2430 (e.g., a bar code scanning device or a radio frequency identification reading device) may be operatively connected to the logic processor based subsystem 110 and configured to scan or read the identifying code on the attached mock gas flow cup. Other means of automatically communicating an identifying code of a mock gas flow cup to the logic processor based subsystem 110 are possible as well, in accordance with other embodiments.

In accordance with an embodiment, the logic processor based subsystem 110 is configured to simulate the establishment of an arc 2714 between the tip of the virtual electrode 2711 of the virtual welding tool 2710 and the virtual welding coupon 2740 at the start of a simulated welding process when a user touches the tip of the mock electrode 2811 of the mock welding tool 2810 to the mock welding coupon 2830 and lifts the tip off of the mock welding coupon 2830 in a determined manner. Such an embodiment simulates a "lift start" for a GTAW welding process, for example. The position of the tip of the mock electrode is tracked by the simulator with respect to the mock welding coupon, using the tracking techniques described herein, in order to accomplish the "lift start" establishment of the simulated arc. Alternatively, the tip of the mock welding electrode may be fitted with a pressure sensor (e.g., a piezoelectric sensor) such that, when the tip of the mock welding electrode touches the mock coupon, the pressure sensor generates an electrical signal which may be provided to the logic processor based subsystem, for example, to indicate the touching. In accordance with another alternative embodiment, the tip of the mock welding electrode and the mock welding coupon may be configured to complete an electrically conductive (or at least partially-conductive) path, indicating to the simulator that the tip has touched the coupon.

In accordance with an embodiment, the logic processor based subsystem 110 is configured to simulate the establishment of an arc 2714 between the tip of the virtual electrode 2711 of the virtual welding tool 2710 and the virtual welding coupon 2740 at the start of a simulated welding process when a user drags the tip of the mock welding electrode across a surface of the mock welding coupon in a determined manner. Such an embodiment simulates a "scratch start" for a GTAW welding process, for example. Again, the position of the tip of the mock electrode is tracked by the simulator with respect to the mock welding coupon, using the tracking techniques described herein, in order to accomplish the "scratch start" establishment of the simulated arc. Alternatively, the tip of the mock welding electrode may be fitted with a pressure sensor (e.g., a piezoelectric sensor) such that, when the tip of the mock welding electrode is dragged across the mock coupon, the pressure sensor generates an electrical signal which may be provided to the logic processor based subsystem, for example, to indicate the dragging. In accordance with another alternative embodiment, the tip of the mock welding electrode and the mock welding coupon may be configured to complete an electrically conductive (or at least partially-conductive) path, indicating to the simulator that the tip is touching and is being dragged across the coupon.

In accordance with an embodiment, the logic processor based subsystem 110 is configured to simulate the establishment of an arc 2714 between the tip of the virtual electrode 2711 of the virtual welding tool 2710 and the virtual welding coupon 2740 at the start of a simulated welding process when a user moves the tip of the mock welding tool toward the mock welding coupon in a determined manner, without touching the mock welding coupon with the tip of the mock welding tool. Such an embodiment may simulate a "high-frequency start" for a GTAW welding process, for example. The simulator simulates using a high-frequency output as the mock welding tool approaches the mock welding coupon at the start of a simulated welding process. The virtual arc 2714 is established once the tip of the electrode of the mock welding tool reaches a determined distance from the surface of the mock welding coupon. In accordance with an embodiment, the foot pedal device 2410 may be used by a user to go into and out of the high-frequency mode of operation.

In accordance with an embodiment, the displaying means 150 may be configured as a touch-screen device that can be used as a welding user interface. The touch-screen device may allow a user to select a user interface that models the user interface of a real-world welding machine. A user may be able to select from a plurality of user interfaces representative of a plurality of real-world welding machines. As a result, a user may be able to use the displayed user interface on the touch-screen device to set up a simulated welding activity for a selected welding machine type. In this manner, a user can become familiar with the user interface of various types of real-world welding machines using the simulator. Furthermore, once a type of welding machine is selected, the simulator may be automatically adapted to simulate that particular type of welding machine, for example, in terms of how the welding power source operates and the types of welding waveforms that are available.

In accordance with an embodiment, the simulator allows a user to select a type of tungsten electrode to use during a simulated welding activity. The selectable types of tungsten electrode may include, for example, Pure Tungsten, 2% Ceriated Tungsten, 1.5% Lanthanated Tungsten, and 2% Thoriated Tungsten. Other types of tungsten electrodes may be selectable as well, in accordance with various other embodiments. If a user selects an incorrect type of tungsten electrode for a particular simulated welding activity, the simulator may indicate to the user that such an incorrect selection has been made. In this manner the simulator can teach the user which types of tungsten electrodes are appropriate for which types of welding activity. Furthermore, based on the type of tungsten electrode selected, the simulation of the welding activity may be modified to account for the type of tungsten electrode. For example, since it is known that the type of tungsten electrode can affect the appearance of the arc, the simulator may adapt the appearance of the arc based on the type of tungsten electrode selected.

In accordance with an embodiment, the simulator may be configured to allow a user to view and inspect a root bead on the inside of a virtual pipe after performing a simulated pipe welding activity. Even after having created a good root bead using the simulator, successive heat passes can degrade the root bead if not performed properly. In accordance with an embodiment, the simulator is configured to modify a virtual root bead weld based on a successive heat pass weld by employing the weld puddle and weld bead simulation methods described herein. The simulator can display the inside of a simulated welded pipe as if the user were looking inside the pipe with a flash light, for example, after performing a pipe welding activity. Alternatively, the simulator can effectively invert the simulated pipe to display the inside of the simulated pipe as if appearing on the outside, and vice versa.

In summary, disclosed is a real-time virtual reality welding system including a programmable processor-based subsystem (a.k.a., a logic processor based subsystem), a spatial tracker operatively connected to the programmable processor-based subsystem, at least one mock welding tool capable of being spatially tracked by the spatial tracker, and at least one display device operatively connected to the programmable processor-based subsystem. The logic processor based subsystem may be operable to generate an interactive welding environment in virtual reality space that emulates welding activity by simulating a virtual weld puddle having dynamic, real time molten metal fluidity and heat dissipation characteristics, responsive to performing a simulated welding activity in real time. The system is further capable of displaying the simulated weld puddle on the display device in real-time. The system may include a foot pedal device in operative communication with the logic processor based subsystem and configured to affect a characteristic of the virtual weld puddle in real time, responsive to user control of the foot pedal device. The system may be configured to track the movements of a mock welding tool and a mock filler wire and determine interaction between the virtual weld puddle, a corresponding virtual welding tool, and a corresponding filler wire in virtual reality space that would result in the welding tool becoming contaminated.

The invention has been described herein with reference to the disclosed embodiments. Obviously, modifications and alterations will occur to others upon a reading and understanding of this specification. It is intended to include all such modifications and alterations insofar as they come within the scope of the appended claims or the equivalence thereof.

**Reference numbers:**

| | | | |
|---|---|---|---|
| 10 | system/simulator | 137 | dial/knob |
| 12 | end user(s) | 140 | personalized display |
| 12a | trainee user | 150 | display screen |
| 12b | instructor user | 153 | user selections |
| 15 | environment | 155 | input device |
| 100 | simulator | 156 | welding electrode holder |
| 110 | subsystem | 160 | mock welding tool |
| 111 | central processing unit | 161 | holder |
| 115 | graphics processing units | 162 | simulated stick electrode |
| 116 | computed unified device architecture | 163 | resistive tip |
| 117 | shader | 170 | stand |
| 118 | video output | 171 | adjustable table |
| 119 | video output | 172 | stand base |
| 120 | spatial tracker | 173 | adjustable arm |
| 121 | magnetic source | 174 | vertical post |
| 122 | sensors | 175 | welding coupon |
| 123 | disk | 176 | welding joint |
| 124 | power source | 177 | connecting portion |
| 125 | cables | 179 | predefined points/dimples |
| 126 | processor tracking unit | 200 | displaying device |
| 130 | welding user interface | 203 | logic processors |
| 131 | buttons | 204 | microprocessor |
| 132 | joystick | 300 | data storage devices |
| 133 | dial/switch/knob | 900 | welding helmet |
| 134 | dial/switch/knob | 910 | speakers |
| 135 | console | 1201 | physical user interface |
| 136 | dial/knob | 1202 | clamp models |
| 1203 | environment models | 1600 | corner welding coupon |
| 1204 | sound content functionality | 1610 | surface |
| 1205 | welding sounds | 1620 | surface |
| 1206 | stand/table model | 1700 | pipe welding coupon |
| 1207 | internal architecture funtionality | 1701 | pipe piece |
| 1208 | calibration functionality | 1702 | pipe piece |
| 1210 | coupon models | 1703 | root joint |
| 1211 | welding physics | 1704 | attachment piece |
| 1212 | tweaker | 1710 | curved surface |
| 1213 | user interface functionality | 1910 | rectangular bars |
| 1214 | graphing functionality | 1920 | particles |
| 1215 | student reports functionality | 1930 | particle heights |
| 1216 | renderer | 1940 | shaded rectangles |
| 1217 | bead rendering | 2400 | simulator |
| 1218 | 3D textures | 2410 | foot pedal device |
| 1219 | visual cues functionality | 2420 | gas flow selector |
| 1220 | tolerance functionality | 2430 | reading device |
| 1221 | tolerance editor | 2710 | virtual welding tool |
| 1222 | special effects | 2711 | tungsten electrode |
| 1300 | method | 2712 | contact tube |
| 1310 | step | 2713 | GTAW head |
| 1320 | step | 2714 | virtual electric arc |
| 1330 | step | 2715 | virtual shielding gas |
| 1340 | step | 2720 | virtual filler wire |
| 1350 | step | 2730 | virtual weld puddle |
| 1400 | flat welding coupon | 2740 | virtual welding coupon |
| 1410 | flat top surface | 2801 | mock GTAW head |
| 1420 | displacement map | 2805 | mock gas flow cup |
| 1421 | wexel | 2810 | mock welding tool |
| 2811 | mock tungsten electrode | B | point |
| 2812 | sensors | E | point |
| 2813 | mock contact tube | O | point |
| 2820 | mock filler wire | X | point |
| 2821 | sensors | Y | point |
| 2830 | mock welding coupon | Z | point |

## Claims

1. A simulator (10, 2400) for facilitating virtual welding said simulator comprising: a logic processor based subsystem operable to execute coded instructions for generating an interactive welding environment in virtual reality space that emulates welding activity on a virtual welding coupon (2740), wherein the interactive welding environment simulates a virtual weld puddle (2730) on the virtual welding coupon (2740), having dynamic real time molten metal fluidity and heat dissipation characteristics, responsive to performing the virtual welding activity in real time;
displaying means (140, 150, 200) operatively connected to the logic processor based subsystem and configured to visually depict the interactive welding environment, including the virtual weld puddle (2730) on the virtual welding coupon (2740), in real time; **characterised by**:
a mock filler wire represented in virtual reality space by a virtual filler wire (2720); and
one or more second sensors (2812, 2821) configured to facilitate tracking movement of at least a tip of the mock filler wire in real time by communicating data about a temporally changing position of the mock filler wire to the spatial tracking subsystem,
wherein the logic processor based subsystem is configured to accept tracking information from the spatial tracking subsystem and determine when the tip of the virtual filler wire (2720), corresponding to the tip of the mock filler wire, touches the virtual welding tool in virtual reality space during the virtual welding activity, and wherein the logic processor based subsystem is further configured to generate an indication, to be provided to a user, that the virtual welding tool has become contaminated due to the touching.

2. The simulator of claim 1, comprising a foot pedal device (2410) in operative communication with the logic processor based subsystem and configured to affect at least one characteristic of the virtual weld puddle (2730) in real time, responsive to user control of the foot pedal device;

3. The simulator of claim 2, wherein the foot pedal device (2410) is in operative communication with the logic processor based subsystem by one of a wired means or a wireless means.

4. The simulator of claim 2 or 3, wherein the foot pedal device (2410) is a mock foot pedal device simulating a real-world foot pedal device, or wherein the foot pedal device (2410) is a real-world foot pedal device capable of being used with a real-world welding system.

5. The simulator of one of the claims 1 to 4, wherein the foot pedal device (2410) is configured to provide haptic feedback to the user indicating that a present pedal position of the foot pedal device is outside of a determined range for proper welding.

6. The simulator of one of the claims 1 to 5, wherein the at least one characteristic of the virtual weld puddle (2730) is one or more of a width of the virtual weld puddle (2730) and a height of the virtual weld puddle (2730).

7. The simulator of one of the claims 1 to 6, wherein the logic processor based subsystem is configured to simulate changing of at least one simulated welding parameter in response to the user control of the foot pedal device (2410), thereby affecting the at least one characteristic of the virtual weld puddle (2710), wherein the at least one welding parameter preferably is at least one of a simulated welding output current level or a simulated wire feed speed.

8. The simulator of one of the claims 1 to 7, further comprising:
a mock welding coupon (2740) representative of the virtual welding coupon in virtual reality space;
a mock welding tool (2810), representative of a virtual welding tool in virtual reality space, for performing virtual welding activity on the virtual welding coupon (2740) in real time as a user manipulates the mock welding tool (2810) with respect to the mock welding coupon (2740);
a spatial tracking subsystem operatively connected to the logic processor based subsystem; and
one or more sensors (2812, 2821) configured to facilitate tracking movement of the mock welding tool (2810) in real time by communicating data about a temporally changing position of the mock welding tool (2810) to the spatial tracking subsystem; wherein preferably the mock welding tool (2810) and the corresponding virtual welding tool are simulated as including one of a non-consumable tungsten electrode (2811), a consumable stick electrode, or a consumable wire electrode.

9. A system (10) for facilitating virtual welding activity, in particular comprising the simulator of one of the claims 1 to 8, **characterized by**:
a mock welding coupon (2830) represented in virtual reality space by a virtual welding coupon (2740);
a mock welding tool (2810) represented in virtual reality space by a virtual welding tool;
a logic processor based subsystem operable to execute coded instructions for generating an interactive welding environment in virtual reality space that emulates welding activity on the virtual welding coupon (2740) by the virtual welding tool, wherein the interactive welding environment simulates a virtual weld puddle (2730) on the virtual welding coupon (2740), having dynamic real time molten metal fluidity and heat dissipation characteristics, responsive to performing the virtual welding activity in real time;
a spatial tracking subsystem operatively connected to the logic processor based subsystem; and
one or more first sensors (2812, 2821) configured to facilitate tracking movement of at least a tip of the mock welding tool (2810) in real time by communicating data about a temporally changing position of the mock welding tool (2810) to the spatial tracking subsystem,
wherein the logic processor based subsystem is configured to accept tracking information from the spatial tracking subsystem and determine when the tip of the virtual welding tool, corresponding to the tip of the mock welding tool (2810), intersects a surface of the virtual weld puddle (2730) in virtual reality space during the virtual welding activity, and wherein the logic processor based subsystem is further configured to generate an indication, to be provided to a user, that the virtual welding tool has become contaminated due to the intersecting.

10. The system of claim 9, further comprising;
a mock filler wire represented in virtual reality space by a virtual filler wire (2720); and
one or more second sensors (2812, 2821) configured to facilitate tracking movement of at least a tip of the mock filler wire in real time by communicating data about a temporally changing position of the mock filler wire to the spatial tracking subsystem,
wherein the logic processor based subsystem is configured to accept tracking information from the spatial tracking subsystem and determine when the tip of the virtual filler wire (2720), corresponding to the tip of the mock filler wire, touches the virtual welding tool in virtual reality space during the virtual welding activity, and wherein the logic processor based subsystem is further configured to generate an indication, to be provided to a user, that the virtual welding tool has become contaminated due to the touching.

11. The system of claim 10, wherein the logic processor based subsystem is further configured to:
determine when the tip of the virtual filler wire (2720) penetrates the virtual weld puddle (2730); and
modify at least a height of the virtual weld puddle (2730) due to the penetration.

12. The system of one of the claims 9 to 11, further comprising a foot pedal device (2410) operatively connected to the logic processor based subsystem and configured to change at least one characteristic of the virtual weld puddle (2730) in real time, responsive to user control of the foot pedal device (2410), wherein the at least one characteristic of the virtual weld puddle (2730) is preferably one or more of a width of the virtual weld puddle (2730) and a height of the virtual weld puddle (2730).

13. The system of one of the claims 9 to 12, further comprising displaying means operatively connected to the logic processor based subsystem for visually depicting the interactive welding environment, wherein said displaying means depicts the virtual weld puddle (2730) on the virtual welding coupon (2740) in real time; wherein preferably the logic processor based subsystem is configured to convert the virtual weld puddle (2730) to a virtual weld bead during the virtual welding activity, wherein the indication that the virtual welding tool has become contaminated due to the intersecting corresponds to depicting the virtual weld bead on the displaying means as having one or more defects.

14. The system of one of the claims 9 to 13, wherein the mock welding tool (2810) and the corresponding virtual welding tool are simulated as including a non-consumable tungsten electrode; and/or wherein a stick-out position of the mock welding tool is adjustable; and/or further comprising a user selectable gas flow selector mounted on the mock welding tool and configured to communicate to the logic processor based subsystem that a simulated gas flow out of the virtual welding tool is off when in a first position, and that the simulated gas flow is on when in a second position; and/or further comprising a plurality of mock gas flow cups (2805) each configured to be attached to and detached from the mock welding tool (2810), wherein each mock gas flow cup (2805) of the plurality of mock gas flow cups (2805) is configured to simulate a unique directing of gas flow out of the mock welding tool (2810).

15. The system of one of the claims 1 to 15, wherein the logic processor based subsystem is configured to simulate the establishment of an arc between the tip of the virtual welding tool and the virtual welding coupon (2740) when a user touches the tip of the mock welding tool (2810) to the mock welding coupon and lifts the tip of the mock welding tool off of the mock welding coupon in a determined manner; and/or wherein the logic processor based subsystem is configured to simulate the establishment of an arc between the tip of the virtual welding tool and the virtual welding coupon (2740) when a user drags the tip of the mock welding tool (2810) across a surface of the mock welding coupon in a determined manner; and/or wherein the logic processor based subsystem is configured to simulate the establishment of an arc between the tip of the virtual welding tool and the virtual welding coupon (2740) when a user moves the tip of the mock welding tool (2810) toward the mock welding coupon in a determined manner, without touching the mock welding coupon with the tip of the mock welding tool (2810).

## Patentansprüche

1. Simulator (10, 2400) zum Ermöglichen von virtuellem Schweißen, wobei der Simulator Folgendes umfasst:
ein Logikprozessor-basiertes Teilsystem, das dafür geeignet ist, codierte Instruktionen auszuführen, um eine interaktive Schweißumgebung im Virtual-Reality-Raum zu generieren, der eine Schweißaktivität auf einem virtuellen Schweißprüfstück (2740) emuliert, wobei die interaktive Schweißumgebung eine virtuelle Schweißpfütze (2730) auf dem virtuellen Schweißprüfstück (2740) simuliert, die dynamische Echtzeit-Schmelzmetallfluiditäts- und Wärmedissipationseigenschaften besitzt, sobald die virtuelle Schweißaktivität in Echtzeit ausgeführt wird;
ein Anzeigemittel (140, 150, 200), das mit dem Logikprozessor-basierten Teilsystem wirkverbunden ist und dafür konfiguriert ist, die interaktive Schweißumgebung, einschließlich der virtuellen Schweißpfütze (2730) auf dem virtuellen Schweißprüfstück (2740), in Echtzeit visuell darzustellen;
**gekennzeichnet durch**:
einen Simulations-Fülldraht, der im Virtual-Reality-Raum durch einen virtuellen Fülldraht (2720) dargestellt wird; und
einen oder mehrere zweite Sensoren (2812, 2821), die dafür konfiguriert sind, das Verfolgen der Bewegung von mindestens einer Spitze des Simulations-Fülldrahtes in Echtzeit durch Übermitteln von Daten über eine sich zeitlich verändernde Position des Simulations-Fülldrahtes an das räumliche Verfolgungs-Teilsystem zu ermöglichen,
wobei das Logikprozessor-basierte Teilsystem dafür konfiguriert ist, Verfolgungsinformationen von dem räumlichen Verfolgungs-Teilsystem zu akzeptieren und zu bestimmen, wann die Spitze des virtuellen Fülldrahtes (2720), die der Spitze des Simulations-Fülldrahtes entspricht, das virtuelle Schweißwerkzeug im Virtual-Reality-Raum während der virtuellen Schweißaktivität berührt, und wobei das Logikprozessor-basierte Teilsystem des Weiteren dafür konfiguriert ist, einen an einen Nutzer zu übermittelnden Hinweis zu generieren, dass das virtuelle Schweißwerkzeug aufgrund der Berührung kontaminiert wurde.

2. Simulator nach Anspruch 1, der eine Fußpedalvorrichtung (2410) in Wirkverbindung mit dem Logikprozessor-basierten Teilsystem umfasst und dafür konfiguriert ist, mindestens ein Charakteristikum der virtuellen Schweißpfütze (2730) in Echtzeit herbeizuführen, nachdem der Nutzer die Fußpedalvorrichtung betätigt hat.

3. Simulator nach Anspruch 2, wobei die Fußpedalvorrichtung (2410) mit dem Logikprozessor-basierten Teilsystem durch ein leitungsgebundenes Mittel oder ein Drahtlos-Mittel in Wirkverbindung steht.

4. Simulator nach Anspruch 2 oder 3, wobei die Fußpedalvorrichtung (2410) eine Simulations-Fußpedalvorrichtung ist, die eine reale Fußpedalvorrichtung simuliert, oder wobei die Fußpedalvorrichtung (2410) eine reale Fußpedalvorrichtung ist, die mit einem realen Schweißsystem verwendet werden kann.

5. Simulator nach einem der Ansprüche 1 bis 4, wobei die Fußpedalvorrichtung (2410) dafür konfiguriert ist, dem Nutzer eine haptische Rückmeldung zu geben, die anzeigt, dass eine momentane Pedalposition der Fußpedalvorrichtung außerhalb eines bestimmten Bereichs für fachgerechtes Schweißen liegt.

6. Simulator nach einem der Ansprüche 1 bis 5, wobei das mindestens eine Charakteristikum der virtuellen Schweißpfütze (2730) eine Breite der virtuellen Schweißpfütze (2730) oder eine Höhe der virtuellen Schweißpfütze (2730) oder beides ist.

7. Simulator nach einem der Ansprüche 1 bis 6, wobei das Logikprozessor-basierte Teilsystem dafür konfiguriert ist, das Ändern mindestens eines simulierten Schweißparameters zu simulieren, nachdem der Nutzer die Fußpedalvorrichtung (2410) betätigt hat, wodurch das mindestens eine Charakteristikum der virtuellen Schweißpfütze (2710) beeinflusst wird, wobei der mindestens eine Schweißparameter bevorzugt ein simulierter Schweißausgangsstrompegel oder eine simulierte Drahtzufuhrgeschwindigkeit oder beides ist.

8. Simulator nach einem der Ansprüche 1 bis 7, der des Weiteren Folgendes umfasst:
ein Simulations-Schweißprüfstück (2740), das für das virtuelle Schweißprüfstück im Virtual-Reality-Raum repräsentativ ist;
ein Simulations-Schweißwerkzeug (2810), das für ein virtuelles Schweißwerkzeug im Virtual-Reality-Raum repräsentativ ist, zum Ausführen einer virtuellen Schweißaktivität an dem virtuellen Schweißprüfstück (2740) in Echtzeit, während ein Nutzer das Simulations-Schweißwerkzeug (2810) mit Bezug auf das Simulations-Schweißprüfstück (2740) handhabt;
ein räumliches Verfolgungs-Teilsystem, das mit dem Logikprozessor-basierten Teilsystem wirkverbunden ist; und
einen oder mehrere Sensoren (2812, 2821), die dafür konfiguriert sind, das Verfolgen der Bewegung des Simulations-Schweißwerkzeugs (2810) in Echtzeit durch Übermitteln von Daten über eine sich zeitlich verändernde Position des Simulations-Schweißwerkzeugs (2810) an das räumliche Verfolgungs-Teilsystem zu ermöglichen; wobei bevorzugt das Simulations-Schweißwerkzeug (2810) und das entsprechende virtuelle Schweißwerkzeug so simuliert werden, dass sie eine nicht-aufzehrbare Wolfram-Elektrode (2811), eine aufzehrbare Stabelektrode oder eine aufzehrbare Drahtelektrode enthalten.

9. System (10) zum Ermöglichen einer virtuellen Schweißaktivität, das insbesondere einen Simulator nach einem der Ansprüche 1 bis 8 umfasst, **gekennzeichnet durch**:
ein Simulations-Schweißprüfstück (2830), das im Virtual-Reality-Raum durch ein virtuelles Schweißprüfstück (2740) dargestellt wird;
ein Simulations-Schweißwerkzeug (2810), das im Virtual-Reality-Raum durch ein virtuelles Schweißwerkzeug dargestellt wird;
ein Logikprozessor-basiertes Teilsystem, das dafür geeignet ist, codierte Instruktionen auszuführen, um eine interaktive Schweißumgebung im Virtual-Reality-Raum zu generieren, der eine Schweißaktivität auf einem virtuellen Schweißprüfstück (2740) durch das virtuelle Schweißwerkzeug emuliert, wobei die interaktive Schweißumgebung eine virtuelle Schweißpfütze (2730) auf dem virtuellen Schweißprüfstück (2740) simuliert, die dynamische Echtzeit-Schmelzmetallfluiditäts- und Wärmedissipationseigenschaften besitzt, sobald die virtuelle Schweißaktivität in Echtzeit ausgeführt wird;
ein räumliches Verfolgungs-Teilsystem, das mit dem Logikprozessor-basierten Teilsystem wirkverbunden ist; und
einen oder mehrere erste Sensoren (2812, 2821), die dafür konfiguriert sind, das Verfolgen der Bewegung von mindestens einer Spitze des Simulations-Schweißwerkzeugs (2810) in Echtzeit durch Übermitteln von Daten über eine sich zeitlich verändernde Position des Simulations-Schweißwerkzeugs (2810) an das räumliche Verfolgungs-Teilsystem zu ermöglichen,
wobei das Logikprozessor-basierte Teilsystem dafür konfiguriert ist, Verfolgungsinformationen von dem räumlichen Verfolgungs-Teilsystem zu akzeptieren und zu bestimmen, wann die Spitze des virtuellen Schweißwerkzeugs, die der Spitze des Simulations-Schweißwerkzeugs (2810) entspricht, eine Oberfläche der virtuellen Schweißpfütze (2730) im Virtual-Reality-Raum während der virtuellen Schweißaktivität überschneidet, und wobei das Logikprozessor-basierte Teilsystem des Weiteren dafür konfiguriert ist, einen an einen Nutzer zu übermittelnden Hinweis zu generieren, dass das virtuelle Schweißwerkzeug aufgrund des Überschneidens kontaminiert wurde.

10. System nach Anspruch 9, das des Weiteren Folgendes umfasst:
einen Simulations-Fülldraht, der im Virtual-Reality-Raum durch einen virtuellen Fülldraht (2720) dargestellt wird; und
einen oder mehrere zweite Sensoren (2812, 2821), die dafür konfiguriert sind, das Verfolgen der Bewegung von mindestens einer Spitze des Simulations-Fülldrahtes in Echtzeit durch Übermitteln von Daten über eine sich zeitlich verändernde Position des Simulations-Fülldrahtes an das räumliche Verfolgungs-Teilsystem zu ermöglichen, wobei das Logikprozessor-basierte Teilsystem dafür konfiguriert ist, Verfolgungsinformationen von dem räumlichen Verfolgungs-Teilsystem zu akzeptieren und zu bestimmen, wann die Spitze des virtuellen Fülldrahtes (2720), die der Spitze des Simulations-Fülldrahtes entspricht, das virtuelle Schweißwerkzeug im Virtual-Reality-Raum während der virtuellen Schweißaktivität berührt, und wobei das Logikprozessor-basierte Teilsystem des Weiteren dafür konfiguriert ist, einen an einen Nutzer zu übermittelnden Hinweis zu generieren, dass das virtuelle Schweißwerkzeug aufgrund der Berührung kontaminiert wurde.

11. System nach Anspruch 10, wobei das Logikprozessor-basierte Teilsystem des Weiteren für Folgendes konfiguriert ist:
Bestimmen, ob die Spitze des virtuellen Fülldrahtes (2720) in die virtuelle Schweißpfütze (2730) eindringt; und
Modifizieren mindestens einer Höhe der virtuellen Schweißpfütze (2730) aufgrund des Eindringens.

12. System nach einem der Ansprüche 9 bis 11, das des Weiteren eine Fußpedalvorrichtung (2410) umfasst, die mit dem Logikprozessor-basierten Teilsystem wirkverbunden ist und dafür konfiguriert ist, mindestens ein Charakteristikum der virtuellen Schweißpfütze (2730) in Echtzeit zu ändern, nachdem der Nutzer die Fußpedalvorrichtung (2410) betätigt hat, wobei das mindestens eine Charakteristikum der virtuellen Schweißpfütze (2730) bevorzugt eine Breite der virtuellen Schweißpfütze (2730) oder eine Höhe der virtuellen Schweißpfütze (2730) oder beides ist.

13. System nach einem der Ansprüche 9 bis 12, das des Weiteren ein Anzeigemittel umfasst, das mit dem Logikprozessor-basierten Teilsystem wirkverbunden ist, um die interaktive Schweißumgebung visuell dazustellen, wobei das Anzeigemittel die virtuelle Schweißpfütze (2730) auf dem virtuellen Schweißprüfstück (2740) in Echtzeit darstellt; wobei bevorzugt das Logikprozessor-basierte Teilsystem dafür konfiguriert ist, die virtuelle Schweißpfütze (2730) während der virtuellen Schweißaktivität in eine virtuelle Schweißraupe umzuwandeln, wobei der Hinweis, dass das virtuelle Schweißwerkzeug aufgrund des Überschneidens kontaminiert wurde, dem Darstellen der virtuellen Schweißraupe auf dem Anzeigemittel in einer solchen Weise entspricht, dass sie einen oder mehrere Defekte aufweist.

14. System nach einem der Ansprüche 9 bis 13, wobei das Simulations-Schweißwerkzeug (2810) und das entsprechende virtuelle Schweißwerkzeug so simuliert werden, dass sie eine nicht-aufzehrbare WolframElektrode aufweisen; und/oder wobei eine freie Elektrodenlänge des Simulations-Schweißwerkzeugs justierbar ist; und/oder des Weiteren einen durch den Nutzer bedienbaren Gasströmungswähler umfasst, der an dem Simulations-Schweißwerkzeug montiert ist und dafür konfiguriert ist, an das Logikprozessor-basierte Teilsystem zu übermitteln, dass eine simulierte Gasströmung aus dem virtuellen Schweißwerkzeug aus ist, wenn er sich in einer ersten Position befindet, und dass die simulierte Gasströmung an ist, wenn er sich in einer zweiten Position befindet; und/oder des Weiteren mehrere Simulations-Gasströmungstrichter (2805) umfasst, die jeweils dafür konfiguriert sind, an dem Simulations-Schweißwerkzeug (2810) angebracht und von ihm abgenommen zu werden, wobei jeder Simulations-Gasströmungstrichter (2805) der mehreren Simulations-Gasströmungstrichter (2805) dafür konfiguriert ist, ein ganz bestimmtes Richten einer Gasströmung aus dem Simulations-Schweißwerkzeug (2810) zu simulieren.

15. System nach einem der Ansprüche 1 bis 15, wobei das Logikprozessor-basierte Teilsystem dafür konfiguriert ist, das Erzeugen eines Lichtbogens zwischen der Spitze des virtuellen Schweißwerkzeugs und dem virtuellen Schweißprüfstück (2740) zu simulieren, wenn ein Nutzer die Spitze des Simulations-Schweißwerkzeugs (2810) auf das Simulations-Schweißprüfstück setzt und die Spitze des Simulations-Schweißwerkzeugs in einer bestimmten Weise von dem Simulations-Schweißprüfstück abhebt; und/oder wobei das Logikprozessor-basierte Teilsystem dafür konfiguriert ist, das Erzeugen eines Lichtbogens zwischen der Spitze des virtuellen Schweißwerkzeugs und dem virtuellen Schweißprüfstück (2740) zu simulieren, wenn ein Nutzer die Spitze des Simulations-Schweißwerkzeugs (2810) in einer bestimmten Weise über eine Oberfläche des Simulations-Schweißprüfstücks zieht; und/oder wobei das Logikprozessor-basierte Teilsystem dafür konfiguriert ist, das Erzeugen eines Lichtbogens zwischen der Spitze des virtuellen Schweißwerkzeugs und dem virtuellen Schweißprüfstück (2740) zu simulieren, wenn ein Nutzer die Spitze des Simulations-Schweißwerkzeugs (2810) in einer bestimmten Weise in Richtung des Simulations-Schweißprüfstücks bewegt, ohne das Simulations-Schweißprüfstück mit der Spitze des Simulations-Schweißwerkzeugs (2810) zu berühren.

## Revendications

1. Simulateur (10, 2400) pour faciliter un soudage virtuel, ledit simulateur comprenant :
un sous-système basé sur processeur logique utilisable pour exécuter des instructions codées pour générer un environnement de soudage interactif dans un espace de réalité virtuelle qui émule une activité de soudage sur un coupon de soudage virtuel (2740), dans lequel l'environnement de soudage interactif simule un bain de fusion virtuel (2730) sur le coupon de soudage virtuel (2740), comportant des caractéristiques dynamiques en temps réel de fluidité de métal fondu et de dissipation de chaleur, en réponse à l'exécution de l'activité de soudage virtuel en temps réel ;
des moyens d'affichage (140, 150, 200) reliés, de manière opérationnelle, au sous-système basé sur processeur logique et configurés pour représenter visuellement l'environnement de soudage interactif, comprenant le bain de fusion virtuel (2730) sur le coupon de soudage virtuel (2740), en temps réel ;
**caractérisé par** :
un fil d'apport fictif représenté dans un espace de réalité virtuelle par un fil d'apport virtuel (2720) ; et
un ou plusieurs deuxièmes capteurs (2812, 2821) configurés pour faciliter un suivi d'un mouvement d'au moins une extrémité du fil d'apport fictif en temps réel par la communication de données relatives à une position variable dans le temps du fil d'apport fictif au sous-système de suivi spatial,
dans lequel le sous-système basé sur processeur logique est configuré pour accepter des informations de suivi provenant du sous-système de suivi spatial et déterminer quand l'extrémité du fil d'apport virtuel (2720), correspondant à l'extrémité du fil d'apport fictif, touche l'outil de soudage virtuel dans un espace de réalité virtuelle au cours de l'activité de soudage virtuel, et dans lequel le sous-système basé sur processeur logique est en outre configuré pour générer une indication, à fournir à un utilisateur, que l'outil de soudage virtuel est devenu contaminé en raison du toucher.

2. Simulateur selon la revendication 1, comprenant un dispositif à pédale (2410) en communication opérationnelle avec le sous-système basé sur processeur logique et configuré pour affecter au moins une caractéristique du bain de fusion virtuel (2730) en temps réel, en réponse à une commande d'utilisateur du dispositif à pédale.

3. Simulateur selon la revendication 2, dans lequel le dispositif à pédale (2410) est en communication opérationnelle avec le sous-système basé sur processeur logique par l'un d'un moyen filaire ou d'un moyen sans fil.

4. Simulateur selon la revendication 2 ou 3, dans lequel le dispositif à pédale (2410) est un dispositif à pédale fictif simulant un dispositif à pédale réel, ou dans lequel le dispositif à pédale (2410) est un dispositif à pédale réel capable d'être utilisé avec un système de soudage réel.

5. Simulateur selon l'une des revendications 1 à 4, dans lequel le dispositif à pédale (2410) est configuré pour fournir une rétroaction haptique à l'utilisateur indiquant qu'une position de pédale actuelle du dispositif à pédale est à l'extérieur d'une plage déterminée pour un soudage approprié.

6. Simulateur selon l'une des revendications 1 à 5, dans lequel l'au moins une caractéristique du bain de fusion virtuel (2730) est l'une ou les deux d'une largeur du bain de fusion virtuel (2730) et d'une hauteur du bain de fusion virtuel (2730).

7. Simulateur selon l'une des revendications 1 à 6, dans lequel le sous-système basé sur processeur logique est configuré pour simuler un changement d'au moins un paramètre de soudage simulé en réponse à la commande d'utilisateur du dispositif à pédale (2410), en affectant de ce fait l'au moins une caractéristique du bain de fusion virtuel (2710), dans lequel l'au moins un paramètre de soudage est de préférence au moins l'un d'un niveau de courant de sortie de soudage simulé ou d'une vitesse d'alimentation de fil simulée.

8. Simulateur selon l'une des revendications 1 à 7, comprenant en outre :
un coupon de soudage fictif (2740) représentatif du coupon de soudage virtuel dans un espace de réalité virtuelle ;
un outil de soudage fictif (2810), représentatif d'un outil de soudage virtuel dans un espace de réalité virtuelle, pour effectuer une activité de soudage virtuel sur le coupon de soudage virtuel (2740) en temps réel au fur et à mesure qu'un utilisateur manipule l'outil de soudage fictif (2810) par rapport au coupon de soudage fictif (2740) ;
un sous-système de suivi spatial relié, de manière opérationnelle, au sous-système basé sur processeur logique ; et
un ou plusieurs capteurs (2812, 2821) configurés pour faciliter un suivi d'un mouvement de l'outil de soudage fictif (2810) en temps réel en communiquant des données relatives à une position variable dans le temps de l'outil de soudage fictif (2810) au sous-système de suivi spatial ; dans lequel, de préférence, il est simulé que l'outil de soudage fictif (2810) et l'outil de soudage virtuel correspondant comprennent l'une d'une électrode de tungstène non consommable (2811), d'une électrode enrobée consommable, ou d'une électrode de fil consommable.

9. Système (10) pour faciliter une activité de soudage virtuel, comprenant en particulier le simulateur selon l'une des revendications 1 à 8, **caractérisé par** :
un coupon de soudage fictif (2830) représenté dans un espace de réalité virtuelle par un coupon de soudage virtuel (2740) ;
un outil de soudage fictif (2810) représenté dans un espace de réalité virtuelle par un outil de soudage virtuel ;
un sous-système basé sur processeur logique utilisable pour exécuter des instructions codées pour générer un environnement de soudage interactif dans un espace de réalité virtuelle qui émule une activité de soudage sur le coupon de soudage virtuel (2740) par l'outil de soudage virtuel, dans lequel l'environnement de soudage interactif simule un bain de fusion virtuel (2730) sur le coupon de soudage virtuel (2740), comportant des caractéristiques dynamiques en temps réel de fluidité de métal fondu et de dissipation de chaleur, en réponse à l'exécution de l'activité de soudage virtuel en temps réel ;
un sous-système de suivi spatial relié, de manière opérationnelle, au sous-système basé sur processeur logique ; et
un ou plusieurs premiers capteurs (2812, 2821) configurés pour faciliter un suivi d'un mouvement d'au moins une extrémité de l'outil de soudage fictif (2810) en temps réel par la communication de données relatives à une position variable dans le temps de l'outil de soudage fictif (2810) au sous-système de suivi spatial,
dans lequel le sous-système basé sur processeur logique est configuré pour accepter des informations de suivi provenant du sous-système de suivi spatial et déterminer quand l'extrémité de l'outil de soudage virtuel, correspondant à l'extrémité de l'outil de soudage fictif (2810), est en intersection avec une surface du bain de fusion virtuel (2730) dans un espace de réalité virtuelle au cours de l'activité de soudage virtuel, et dans lequel le sous-système basé sur processeur logique est en outre configuré pour générer une indication, à fournir à un utilisateur, que l'outil de soudage virtuel est devenu contaminé en raison de l'intersection.

10. Système selon la revendication 9, comprenant en outre :
un fil d'apport fictif représenté dans un espace de réalité virtuelle par un fil d'apport virtuel (2720) ; et
un ou plusieurs deuxièmes capteurs (2812, 2821) configurés pour faciliter un suivi d'un mouvement d'au moins une extrémité du fil d'apport fictif en temps réel par la communication de données relatives à une position variable dans le temps du fil d'apport fictif au sous-système de suivi spatial,
dans lequel le sous-système basé sur processeur logique est configuré pour accepter des informations de suivi provenant du sous-système de suivi spatial et déterminer quand l'extrémité du fil d'apport virtuel (2720), correspondant à l'extrémité du fil d'apport fictif, touche l'outil de soudage virtuel dans un espace de réalité virtuelle au cours de l'activité de soudage virtuel, et dans lequel le sous-système basé sur processeur logique est en outre configuré pour générer une indication, à fournir à un utilisateur, que l'outil de soudage virtuel est devenu contaminé en raison du toucher.

11. Système selon la revendication 10, dans lequel le sous-système basé sur processeur logique est en outre configuré pour :
déterminer quand l'extrémité du fil d'apport virtuel (2720) pénètre le bain de fusion virtuel (2730) ; et
modifier au moins une hauteur du bain de fusion virtuel (2730) en raison de la pénétration.

12. Système selon l'une des revendications 9 à 11, comprenant en outre un dispositif à pédale (2410) relié, de manière opérationnelle, au sous-système basé sur processeur logique et configuré pour changer au moins une caractéristique du bain de fusion virtuel (2730) en temps réel, en réponse à une commande d'utilisateur du dispositif à pédale (2410), dans lequel l'au moins une caractéristique du bain de fusion virtuel (2730) est de préférence l'une ou les deux d'une largeur du bain de fusion virtuel (2730) et d'une hauteur du bain de fusion virtuel (2730).

13. Système selon l'une des revendications 9 à 12, comprenant en outre des moyens d'affichage reliés, de manière opérationnelle, au sous-système basé sur processeur logique pour représenter visuellement l'environnement de soudage interactif, dans lequel lesdits moyens d'affichage représentent le bain de fusion virtuel (2730) sur le coupon de soudage virtuel (2740) en temps réel ; dans lequel, de préférence, le sous-système basé sur processeur logique est configuré pour convertir le bain de fusion virtuel (2730) en un cordon de soudage virtuel au cours de l'activité de soudage virtuel, dans lequel l'indication que l'outil de soudage virtuel est devenu contaminé en raison de l'intersection correspond à la représentation du cordon de soudage virtuel sur les moyens d'affichage comme ayant un ou plusieurs défauts.

14. Système selon l'une des revendications 9 à 13, dans lequel il est simulé que l'outil de soudage fictif (2810) et l'outil de soudage virtuel correspondant comprennent une électrode de tungstène non consommable ; et/ou dans lequel une position de sortie de baguette de l'outil de soudage fictif est ajustable ; et/ou comprenant en outre un sélecteur de flux de gaz sélectionnable par utilisateur monté sur l'outil de soudage fictif et configuré pour communiquer, au sous-système basé sur processeur logique, qu'un flux de gaz simulé sortant de l'outil de soudage virtuel est arrêté lorsqu'il est à une première position et que le flux de gaz simulé s'écoule lorsqu'il est à une deuxième position ; et/ou comprenant en outre une pluralité de godets de flux de gaz fictifs (2805), chacun d'eux étant configuré pour être attaché à l'outil de soudage fictif (2810) et détaché de celui-ci, dans lequel chaque godet de flux de gaz fictif (2805) de la pluralité de godets de flux de gaz fictifs (2805) est configuré pour simuler une direction unique de flux de gaz sortant de l'outil de soudage fictif (2810).

15. Système selon l'une des revendications 1 à 15, dans lequel le sous-système basé sur processeur logique est configuré pour simuler l'établissement d'un arc entre l'extrémité de l'outil de soudage virtuel et le coupon de soudage virtuel (2740) lorsqu'un utilisateur touche l'extrémité de l'outil de soudage fictif (2810) au coupon de soudage fictif et soulève l'extrémité de l'outil de soudage fictif hors du coupon de soudage fictif d'une manière déterminée ; et/ou dans lequel le sous-système basé sur processeur logique est configuré pour simuler l'établissement d'un arc entre l'extrémité de l'outil de soudage virtuel et le coupon de soudage virtuel (2740) lorsqu'un utilisateur fait glisser l'extrémité de l'outil de soudage fictif (2810) à travers une surface du coupon de soudage fictif d'une manière déterminée ; et/ou dans lequel le sous-système basé sur processeur logique est configuré pour simuler l'établissement d'un arc entre l'extrémité de l'outil de soudage virtuel et le coupon de soudage virtuel (2740) lorsqu'un utilisateur déplace l'extrémité de l'outil de soudage fictif (2810) vers le coupon de soudage fictif d'une manière déterminée, sans toucher le coupon de soudage fictif avec l'extrémité de l'outil de soudage fictif (2810).
